# EUROPEAN PATENT APPLICATION

(11) **EP 4 694 176 A1**
(43) Date of publication of application: **11.02.2026**
(21) Application number: 24779651.9
(22) Date of filing: 18.03.2024
(51) Int. Cl.: H04N 25/79, H04N 25/77, H04N 25/702, H04N 25/707

(54) **LIGHT DETECTION DEVICE AND ELECTRONIC APPARATUS**

(30) Priority: 29.03.2023 JP 2023054140
(71) Applicant: Sony Semiconductor Solutions Corporation, Atsugi-shi, Kanagawa 243-0014 (JP)
(72) Inventor: ONO Kenta, Atsugi-shi, Kanagawa 243-0014 (JP); KAI Takayuki, Atsugi-shi, Kanagawa 243-0014 (JP); YATSUNAMI Yumi, Atsugi-shi, Kanagawa 243-0014 (JP); OZAWA Hiroyuki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/010513
(87) International publication number: WO 2024/203526

(57) **Abstract**

A size of stacked chips can be optimized by preventing a useless space from being generated in each layer of the stacked chips.

A photodetection device includes: a plurality of first photoelectric conversion elements and a plurality of second photoelectric conversion elements that accumulate charges according to an amount of incident light; a first signal processing circuit that performs signal processing by performing analog-to-digital conversion on a plurality of pixel signals according to the amount of incident light on the basis of the charges accumulated in the plurality of first photoelectric conversion elements; an event detection circuit that generates an event signal representing a change amount of the amount of incident light on the basis of the charges accumulated in the plurality of second photoelectric conversion elements; a first substrate on which the plurality of first photoelectric conversion elements and the plurality of second photoelectric conversion elements are arranged; a second substrate stacked on the first substrate and on which the event detection circuit is arranged; and a third substrate stacked on the first substrate and the second substrate and on which the first signal processing circuit is arranged.

## Description

### TECHNICAL FIELD

The present disclosure relates to a photodetection device and electronic equipment.

### BACKGROUND ART

An event-based vision sensor (EVS) has been proposed that detects some events such as luminance change in an imaging scene. The EVS has a feature of being able to detect an event with low power at high speed compared to a frame-based vision sensor, for example, a complementary metal oxide semiconductor (CMOS) image sensor, or the like, that scans all pixels for each predetermined period to obtain gradation information of each pixel.

In recent years, development of a hybrid EVS that obtains gradation image data including gradation information in parallel with detection of an event is also in progress. For example, Patent Document 1 discloses a hybrid EVS that reduces a time gap between detection of an event and obtainment of gradation image data.

### CITATION LIST

### PATENT DOCUMENT

Patent Document 1: Japanese Patent Application Laid-Open No. 2020-127186

### SUMMARY OF THE INVENTION

### PROBLEMS TO BE SOLVED BY THE INVENTION

Some hybrid EVSs in related art employ a two-layer stacked structure of a pixel chip including a pixel array in which pixels are arranged, and a logic chip including an event processing circuit that detects and processes an event and a signal processing circuit that generates gradation image data.

However, the event processing circuit requires an area equivalent to that of a pixel array unit. If the event processing circuit and the signal processing circuit are combined, the logic chip requires a larger area than the pixel array unit. Thus, in a case where the pixel chip and the logic chip are stacked, a size of the pixel chip has to be matched with a size of the logic chip, which generates a useless space in the pixel chip and degrades a theoretical yield.

Thus, the present disclosure provides a photodetection device and electronic equipment capable of optimizing a size of stacked chips so as not to generate a useless space in each layer of the stacked chips.

### SOLUTIONS TO PROBLEMS

In order to solve the above problems, according to the present disclosure, a photodetection device is provided, the photodetection device including:
a plurality of first photoelectric conversion elements and a plurality of second photoelectric conversion elements that accumulate charges according to an amount of incident light;
a first signal processing circuit that performs signal processing by performing analog-to-digital conversion on a plurality of pixel signals according to the amount of incident light on the basis of the charges accumulated in the plurality of first photoelectric conversion elements;
an event detection circuit that generates an event signal representing a change amount of the amount of incident light on the basis of the charges accumulated in the plurality of second photoelectric conversion elements;
a first substrate on which the plurality of first photoelectric conversion elements and the plurality of second photoelectric conversion elements are arranged;
a second substrate stacked on the first substrate and on which the event detection circuit is arranged; and
a third substrate stacked on the first substrate and the second substrate and on which the first signal processing circuit is arranged.

The first substrate, the second substrate, and the third substrate may be stacked in this order.

The first substrate may include
a first pixel including the first photoelectric conversion elements,
a second pixel including the second photoelectric conversion elements, and
a pixel array unit including a plurality of the first pixels and a plurality of the second pixels.

An entire region of the event detection circuit may be arranged so as to overlap with the pixel array unit in plan view.

The photodetection device may include:
a plurality of pixel circuits that generates the plurality of pixel signals on the basis of the charges accumulated in the plurality of first photoelectric conversion elements;
a first transmission unit that transmits the event signal from the second substrate to the third substrate;
a second transmission unit that transmits the plurality of pixel signals from the plurality of pixel circuits to the third substrate; and
a third transmission unit that transmits a control signal for controlling at least one of the plurality of first photoelectric conversion elements or the plurality of pixel circuits from the third substrate to at least one of the plurality of first photoelectric conversion elements or the plurality of pixel circuits.

The pixel circuits may be arranged on the first substrate, and
the third transmission unit may transmit the control signal from the third substrate to the first substrate.

The second transmission unit may be arranged so as to reach the third substrate from the first substrate via the second substrate, and
the third transmission unit may be arranged so as to reach the first substrate from the third substrate via the second substrate.

The photodetection device may include a fourth substrate on which the pixel circuits are arranged,
the third transmission unit may transmit the control signal from the third substrate to at least one of the first substrate or the fourth substrate, and
the first substrate, the fourth substrate, the second substrate, and the third substrate may be stacked in this order.

The second substrate may include an event storage unit that stores a plurality of the event signals generated within a predetermined period, and
the first transmission unit may divide the plurality of event signals stored in the event storage unit into a predetermined number of times of transmission in chronological order and transmit the divided event signals to the third substrate.

The photodetection device may further include:
a plurality of first signal lines that transmits the plurality of event signals from the event detection circuit to the event storage unit; and
a plurality of second signal lines that transmits the plurality of event signals from the first transmission unit to the third substrate, in which
the number of the plurality of second signal lines may be a value obtained by dividing the number of the plurality of first signal lines by the predetermined number of times of transmission.

The second substrate may include a compression unit that compresses the plurality of event signals, the first transmission unit may transmit the event signals compressed by the compression unit to the third substrate, and
the third substrate may include:
a restoration unit that restores the compressed event signals transmitted by the first transmission unit; and
a second signal processing circuit that performs signal processing on the plurality of event signals restored by the restoration unit.

The second substrate may include a plurality of first pads connected to an external connection terminal,
the third substrate may include a plurality of second pads arranged so as to overlap with the plurality of first pads in plan view, and
the photodetection device may further include a plurality of conductive members that makes each of the plurality of second pads conductive to the corresponding first pad.

The third substrate may include an output unit that transmits image data and event information to outside, and
the second pad, the output unit, and the first transmission unit may be arranged along a first side of the third substrate.

The third transmission unit may be arranged along a second side of the third substrate, and
the second transmission unit may be arranged along one side or two sides of the third substrate other than the first side and the second side.

At least one of the first transmission unit, the second transmission unit, or the third transmission unit may include:
a via penetrating the second substrate; and
a first metal pad connected to the via, and
the third substrate may include a second metal pad bonded to the first metal pad.

The photodetection device may include:
a histogram generation unit that generates a histogram representing an appearance frequency of each motion amount of a subject on the basis of a plurality of the event signals; and
a threshold generation unit that determines a threshold to be used for determination as to whether the event detection circuit generates the event signal, on the basis of the histogram, in which
the event detection circuit may generate the event signal on the basis of the threshold.

The third substrate may include an event removal unit that removes an event signal caused by movement of the plurality of second photoelectric conversion elements among a plurality of the event signals, and
the first transmission unit may transmit the event signal removed by the event removal unit from the second substrate to the third substrate.

The third substrate may include a blur correction unit that performs blur correction of the plurality of pixel signals on the basis of the event signal.

The third substrate may include a frame interpolation unit that performs frame interpolation processing of gradation image data generated for each frame by the plurality of pixel signals on the basis of the event signal.

Furthermore, according to the present disclosure, electronic equipment is provided, the electronic equipment including:
a photodetection device; and
a processing unit that processes image data and event information output from the photodetection device, in which
the photodetection device includes:
   a plurality of first photoelectric conversion elements and a plurality of second photoelectric conversion elements that accumulate charges according to an amount of incident light;
   a first signal processing circuit that performs signal processing by performing analog-to-digital conversion on a plurality of pixel signals according to the amount of incident light on the basis of the charges accumulated in the plurality of first photoelectric conversion elements;
   an event detection circuit that generates an event signal representing a change amount of the amount of incident light on the basis of the charges accumulated in the plurality of second photoelectric conversion elements;
   a first substrate on which the plurality of first photoelectric conversion elements and the plurality of second photoelectric conversion elements are arranged;
   a second substrate stacked on the first substrate and on which the event detection circuit is arranged; and
   a third substrate stacked on the first substrate and the second substrate and on which the first signal processing circuit is arranged.

### BRIEF DESCRIPTION OF DRAWINGS

Fig. 1 is a block diagram of electronic equipment according to a first embodiment of the present disclosure.
Fig. 2 is a block diagram of a photodetection device according to the first embodiment of the present disclosure.
Fig. 3 is a circuit diagram illustrating an example of a configuration of a gradation pixel and a gradation pixel circuit.
Fig. 4 is a circuit diagram illustrating an example of a configuration of an event detection pixel and an event detection pixel circuit.
Fig. 5 is a view illustrating a stacked structure of the photodetection device according to the first embodiment and a configuration example of each substrate.
Fig. 6 is a block diagram illustrating a detailed configuration example of a first substrate.
Fig. 7 is a block diagram illustrating a first example of a detailed configuration example of a second substrate.
Fig. 8 is a block diagram illustrating a detailed configuration example of a third substrate.
Fig. 9A is a block diagram illustrating a second example of a detailed configuration of the second substrate.
Fig. 9B is a block diagram illustrating a third example of the detailed configuration of the second substrate.
Fig. 10A is a block diagram illustrating a first configuration example of an event buffer and its peripheral portion.
Fig. 10B is a block diagram illustrating a second configuration example of the event buffer and its peripheral portion.
Fig. 11A is a block diagram illustrating a first configuration example of the event detection circuit and its peripheral portion.
Fig. 11B is a view indicating a histogram generated by a histogram generation unit in Fig. 11A.
Fig. 11C is a block diagram illustrating a second configuration example of the event detection circuit and its peripheral portion.
Fig. 11D is a view indicating a histogram generated by the histogram generation unit in Fig. 11C.
Fig. 12 is a block diagram for explaining detailed operation of a pixel signal transmission unit and a control signal transmission unit.
Fig. 13 is a block diagram for explaining detailed arrangement of a first pad and a second pad.
Fig. 14 is a block diagram for explaining detailed arrangement of an output unit and an event signal transmission unit.
Fig. 15 is a view illustrating a stacked structure of a photodetection device according to a comparative example and a configuration example of each substrate.
Fig. 16 is a view illustrating a stacked structure of a photodetection device according to a second embodiment and a configuration example of each substrate.
Fig. 17 is a block diagram illustrating a configuration of a logic circuit in a third embodiment.
Fig. 18A is a view illustrating a first configuration example of a third substrate in the third embodiment.
Fig. 18B is a view illustrating a second configuration example of the third substrate in the third embodiment.
Fig. 19 is a block diagram illustrating an example of a schematic configuration of a vehicle control system.
Fig. 20 is an explanatory diagram illustrating an example of installation positions of an outside-vehicle information detecting section and an imaging section.

### MODE FOR CARRYING OUT THE INVENTION

Hereinafter, embodiments of a photodetection device and electronic equipment will be described with reference to the drawings. Hereinafter, main components of the photodetection device and the electronic equipment will be mainly described, but the photodetection device and the electronic equipment may have components and functions that are not illustrated or described. The following description is not intended to exclude components and functions that are not illustrated or described.

### (First embodiment)

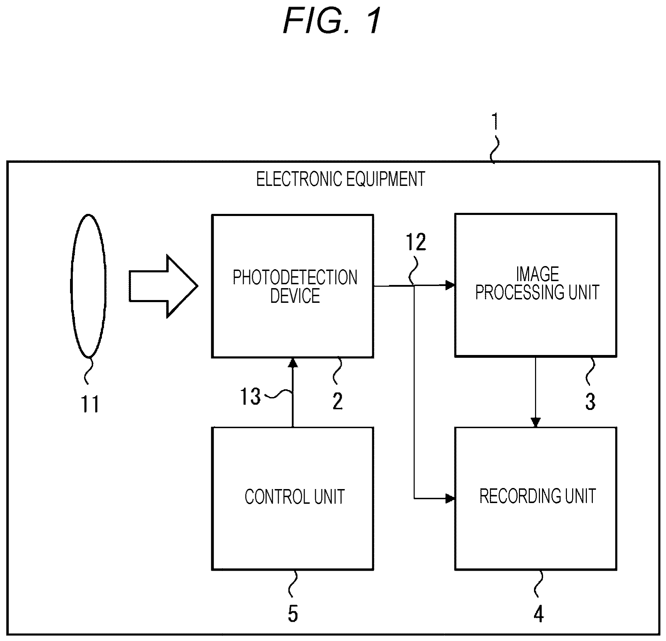

Fig. 1 is a block diagram of electronic equipment 1 according to a first embodiment of the present disclosure. The electronic equipment 1 has a function of detecting an event based on a change amount of luminance of incident light and gradation based on the luminance of the incident light in parallel. The electronic equipment 1 of Fig. 1 includes an imaging lens 11, a photodetection device 2, an image processing unit 3, a recording unit 4, and a control unit 5. For example, while the electronic equipment 1 can be applied to a monitoring camera, a camera mounted on an industrial robot, or the like, the electronic equipment 1 has any specific application and configuration.

The imaging lens 11 condenses and guides incident light to the photodetection device 2. The photodetection device 2 captures an image of the incident light. The photodetection device 2 is, for example, a hybrid EVS, and photoelectrically converts the incident light to generate event information and gradation information. The electronic equipment 1 outputs the event information and the gradation information to the image processing unit 3 and the recording unit 4 via a signal line 12.

The image processing unit 3 executes predetermined image processing such as image recognition, tracking, or analysis on the event information and the gradation information. The event information, the gradation information, and the like, subjected to the image processing by the image processing unit 3 are output to, for example, the recording unit 4.

The recording unit 4 records the event information and the gradation information output from the photodetection device 2 or the image processing unit 3. The recording unit 4 may be arranged in a server, or the like, connected via a network. In the electronic equipment 1 according to the present embodiment, at least one of the image processing unit 3 or the recording unit 4 in Fig. 1 can be omitted.

The control unit 5 instructs the photodetection device 2 to generate the event information and the gradation information via a control line 13.

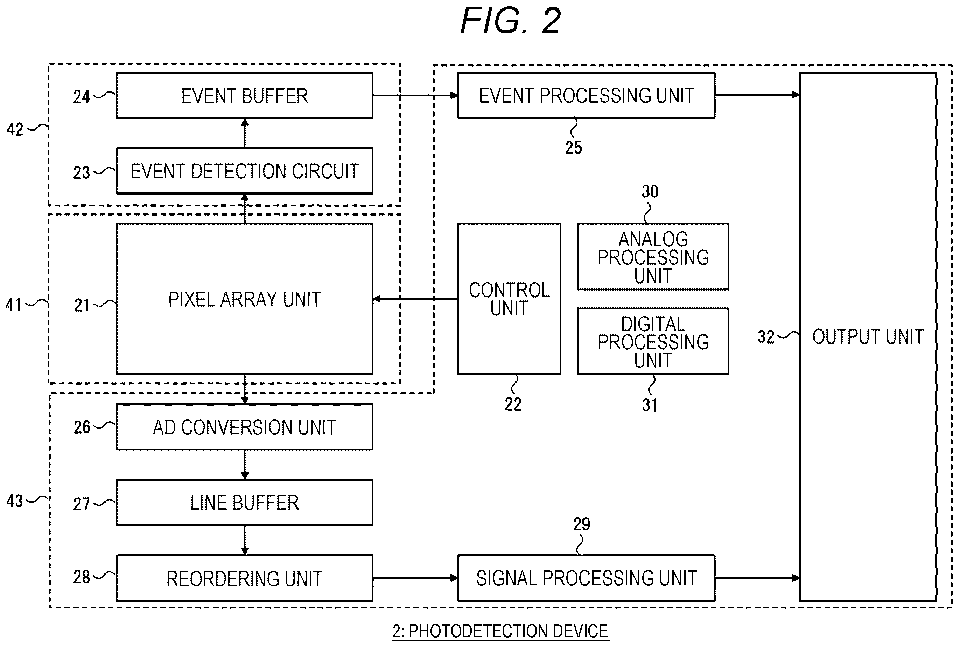

Fig. 2 is a block diagram of the photodetection device 2 according to the first embodiment of the present disclosure. The photodetection device 2 includes a pixel array unit 21, a control unit 22, an event detection circuit 23, an event buffer 24, an event processing unit 25, an analog-to-digital (AD) conversion unit 26, a line buffer 27, a reordering unit 28, a signal processing unit 29, an analog processing unit 30, a digital processing unit 31, and an output unit 32.

In the pixel array unit 21, a plurality of pixels (a plurality of gradation pixels and a plurality of event detection pixels) is arranged. The gradation pixel is also referred to as a first pixel, and is used for detecting gradation according to an amount of incident light. The event detection pixel is also referred to as a second pixel, and is used for detecting an event that occurs when a change amount of the amount of incident light exceeds a threshold. Each of the gradation pixel and the event detection pixel includes a photoelectric conversion element. The photoelectric conversion element receives light and stores charges according to an amount of the received light.

The control unit 22 includes a shift register, an address decoder, an arbiter, or the like. The control unit 22 controls each pixel in the pixel array unit 21 and sequentially performs transfer of charges, reset of charges, or the like.

The event detection circuit 23 includes a plurality of event detection pixel circuits. Charges are transferred to each event detection pixel circuit from a corresponding event detection pixel in the pixel array unit 21. The event detection pixel circuit detects an event on the basis of the transferred charges and outputs an event signal to the event buffer 24.

The event buffer 24 is a buffer that accumulates event signals necessary for creating event information. The event buffer 24 holds event signals corresponding to at least one frame. The event buffer 24 outputs the accumulated event signals to the event processing unit 25. Note that, in the present specification, the event detection circuit 23 and the event buffer 24 may be collectively referred to as the event detection circuit 23.

The event processing unit 25 performs predetermined signal processing on the event signal and generates event information. The event information is, for example, event image data generated in a frame unit. The event processing unit 25 outputs the event information to the output unit 32. In the present specification, the event processing unit 25 is also referred to as a second signal processing circuit.

A pixel signal is input from a gradation pixel in the pixel array unit 21 to the AD conversion unit 26 via a gradation pixel circuit (also simply referred to as a pixel circuit) not illustrated. The AD conversion unit 26 performs analog-to-digital conversion on the pixel signal and generates a digital pixel signal. The digital pixel signal is output to the line buffer 27.

A phase-locked loop, a digital-to-analog conversion unit, and the like, are arranged around the AD conversion unit 26, but are not illustrated in Fig. 2. The phase-locked loop generates a clock signal. The digital-to-analog conversion unit generates a reference signal on the basis of the clock signal. Furthermore, the AD conversion unit 26 includes a column processing circuit, and the like, that compare the pixel signal output from the gradation pixel for each column of the pixel array unit 21 with the reference signal generated by the digital-to-analog conversion unit to generate a digital pixel signal.

The line buffer 27 is a buffer that accumulates digital pixel signals necessary for creating gradation image data. The gradation image data is also referred to as gradation information. Alternatively, the gradation image data is also simply referred to as image data. The line buffer 27 holds digital pixel signals of gradation pixels corresponding to at least one row in the pixel array unit 21. The line buffer 27 outputs the accumulated digital pixel signals to the reordering unit 28.

The reordering unit 28 reorders in signal processing order, the digital pixel signals output from the line buffer 27 in output order of the gradation pixels, and outputs the reordered digital pixel signals to the signal processing unit 29.

The signal processing unit 29 performs predetermined signal processing on the digital pixel signals output from the reordering unit 28 to generate gradation image data. The signal processing unit 29 outputs the gradation image data to the output unit 32.

In the present specification, a circuit that performs signal processing by performing analog-to-digital conversion on a pixel signal is also referred to as a first signal processing circuit. The first signal processing circuit includes, for example, the AD conversion unit 26, the line buffer 27, the reordering unit 28, and the signal processing unit 29. Note that the line buffer 27 or the reordering unit 28 may be omitted from the first signal processing unit.

The analog processing unit 30 supplies, for example, a predetermined reference signal, or the like, to the AD conversion unit 26, or the like.

The digital processing unit 31 supplies a predetermined clock signal, or the like, to, for example, the line buffer 27, the reordering unit 28, the signal processing unit 29, and the like.

The output unit 32 outputs the event image data and the gradation image data to a device (for example, the image processing unit 3) at a subsequent stage of the photodetection device 2.

The photodetection device 2 includes at least three stacked semiconductor substrates. Each semiconductor substrate to be stacked is also referred to as a chip. Details of the stacked structure will be described later. The photodetection device 2 includes a first substrate 41, a second substrate 42, and a third substrate 43.

The pixel array unit 21 is arranged on the first substrate 41. The event detection circuit 23 and the event buffer 24 are arranged on the second substrate 42. On the third substrate 43, the control unit 22, the event processing unit 25, the AD conversion unit 26, the line buffer 27, the reordering unit 28, the signal processing unit 29, the analog processing unit 30, the digital processing unit 31, and the output unit 32 are arranged. Further, the AD conversion unit 26 and the analog processing unit 30 on the third substrate 43 process various analog signals, and the control unit 22, the event processing unit 25, the line buffer 27, the reordering unit 28, the signal processing unit 29, and the digital processing unit 31 process various digital signals.

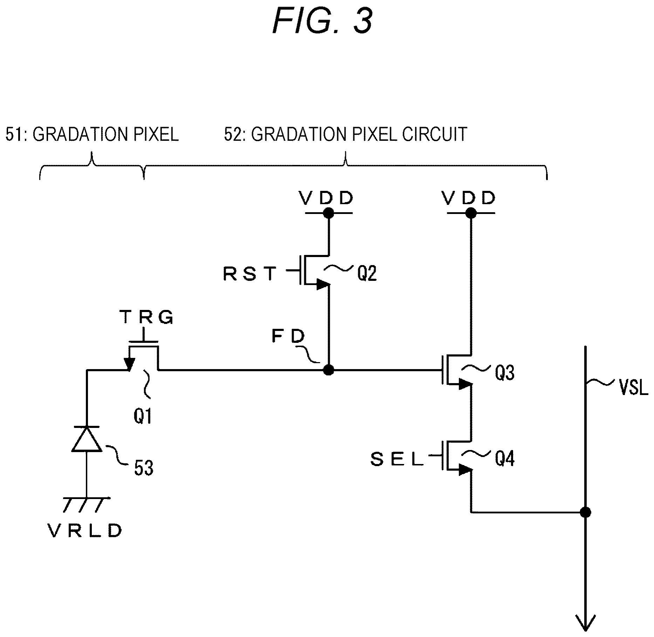

Fig. 3 is a circuit diagram illustrating an example of a configuration of the gradation pixel 51 and the gradation pixel circuit 52. The gradation pixel 51 and the gradation pixel circuit 52 in Fig. 3 include a photoelectric conversion element (first photoelectric conversion element) 53, a transfer transistor Q1, a reset transistor Q2, an amplification transistor Q3, and a selection transistor Q4.

The gradation pixel 51 and the gradation pixel circuit 52 may be arranged on separate semiconductor substrates as described later. In this case, whether only the photoelectric conversion element 53 is used as the gradation pixel 51 or which transistor in Fig. 3 is included in the gradation pixel 51 in addition to the photoelectric conversion element 53 is arbitrarily set. Hereinafter, as a representative example, an example in which both the gradation pixel 51 and the gradation pixel circuit 52 are arranged on the first substrate 41 will be first described. The pixel array unit 21 is arranged in substantially the entire region of the first substrate 41, and the pixel array unit 21 includes the gradation pixel 51 and the gradation pixel circuit 52 for each pixel.

The photoelectric conversion element 53 accumulates charges (hereinafter, photocharges) corresponding to an amount of light incident on the corresponding gradation pixel 51. As the photoelectric conversion element 53, for example, a photodiode is used. The gradation pixel circuit 52 outputs pixel signals corresponding to the amount of the incident light on the basis of the photocharges accumulated in the photoelectric conversion element 53. The pixel signals output from the gradation pixel circuit 52 are output to the AD conversion unit 26 at a subsequent stage via a signal line VSL.

In the example of Fig. 3, the gradation pixel 51 includes the photoelectric conversion element 53 and the transfer transistor Q1, and the gradation pixel circuit 52 includes the reset transistor Q2, the amplification transistor Q3, and the selection transistor Q4. The transfer transistor Q1, the reset transistor Q2, and the amplification transistor Q3 are connected to a floating diffusion (floating diffusion region) FD.

In the present specification, four transistors of the transfer transistor Q1, the reset transistor Q2, the amplification transistor Q3, and the selection transistor Q4 are configured with, for example, N-channel metal-oxide-semiconductor (NMOS) transistors. However, the four transistors described as an example here may have any conductivity type. Any of the four transistors may be configured with, for example, a P-channel metal-oxide-semiconductor (PMOS) transistor.

Fig. 3 illustrates an example of a 4Tr configuration in which the gradation pixel 51 and the gradation pixel circuit 52 include four transistors (Tr), but the configuration of the gradation pixel 51 and the configuration of the gradation pixel circuit 52 are not limited thereto. For example, the configuration of the gradation pixel 51 and the configuration of the gradation pixel circuit 52 may be a 3Tr configuration in which the selection transistor Q4 is omitted and the amplification transistor Q3 has the function of the selection transistor Q4, or may be a configuration of 5Tr or more in which a transistor is added as necessary.

The photoelectric conversion element 53 includes an anode and a cathode. Either the cathode or the anode (for example, the cathode) of the photoelectric conversion element 53 is connected to the transfer transistor Q1. The other (for example, the anode) is connected to a reference voltage node VRLD such as ground.

The transfer transistor Q1 is used to switch transfer of the photocharges. A source of the transfer transistor Q1 is connected to the photoelectric conversion element 53. A drain of the transfer transistor Q1 is connected to the floating diffusion FD. The transfer transistor Q1 is turned on by a transfer signal TRG at a high level (e.g., at a level of high-potential side power supply VDD) being input to the gate. As a result, the photocharges accumulated in the photoelectric conversion element 53 are transferred to the floating diffusion FD.

The reset transistor Q2 is used to reset an amount of photocharges in the gradation pixel 51. A source of the reset transistor Q2 is connected to the floating diffusion FD. A drain of the reset transistor Q2 is connected to a node of the high-potential side power supply voltage VDD. The reset transistor Q2 is turned on by a reset signal RST at a high level being input to the gate. With this arrangement, the charges of the floating diffusion FD are discharged to the node of the high-potential side power supply voltage VDD, whereby the floating diffusion FD is reset.

The floating diffusion FD accumulates the photocharges transferred from the photoelectric conversion element 53. As a result, the floating diffusion FD has a potential according to the accumulated charges.

The gate of the amplification transistor Q3 is used as an input unit of a source follower circuit. The gate of the amplification transistor Q3 has the same potential as a potential of the floating diffusion FD. The drain of the amplification transistor Q3 is connected to the node of the high-potential side power supply voltage VDD. The source of the amplification transistor Q3 is connected to a drain of the selection transistor Q4. A source voltage of the amplification transistor Q3 changes in accordance with the potential of the floating diffusion FD.

The selection transistor Q4 is turned on by a high-level selection signal SEL being input to the gate. With this arrangement, a pixel signal Vimg of a voltage level corresponding to the potential of the floating diffusion FD is transmitted from the source of the selection transistor Q4 to the signal line VSL.

For example, in a case where an amount of light incident on the photoelectric conversion element 53 is large, the voltage on the cathode side of the photoelectric conversion element 53 decreases. This decreases the potential of the floating diffusion FD. If the selection transistor Q4 is turned on, the low-level pixel signal Vimg is output to the signal line VSL.

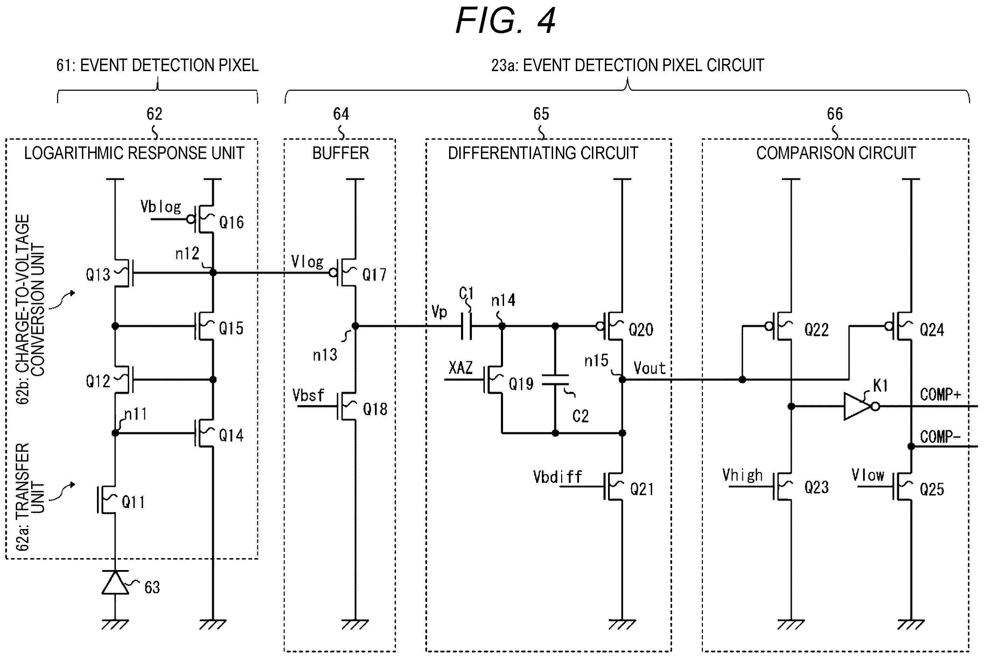

Fig. 4 is a circuit diagram illustrating an example of a configuration of the event detection pixel 61 and the event detection pixel circuit 23a. The event detection pixel 61 includes a logarithmic response unit 62 and a photoelectric conversion element (second photoelectric conversion element) 63. The event detection pixel circuit 23a includes a buffer 64, a differentiating circuit 65, and a comparison circuit 66.

The logarithmic response unit 62 performs logarithmic conversion on the charges photoelectrically converted by the photoelectric conversion element 63 to generate a voltage signal Vlog. The charges are subjected to the logarithmic conversion to make it easier to detect a change amount of the incident light by the logarithmic conversion and expand a dynamic range of the event detection pixel 61.

The logarithmic response unit 62 includes a transfer unit 62a and a charge-to-voltage conversion unit 62b. The transfer unit 62a transfers the charges of the photoelectric conversion element 63. The charge-to-voltage conversion unit 62b generates the voltage signal Vlog based on the charges of the photoelectric conversion element 63.

The buffer 64 converts a voltage level of the voltage signal Vlog generated by the logarithmic response unit 62 and outputs a voltage signal Vsf.

The differentiating circuit 65 outputs a differential signal Vout indicating a change amount of the voltage per unit time of the voltage signal Vsf output from the buffer 64. Further, an auto zero signal XAZ is input to the differentiating circuit 65 from a reset control circuit (not illustrated), or the like. The auto zero signal XAZ is a signal that gives an instruction to reset the charges accumulated in the differentiating circuit 65. The differentiating circuit 65 is initialized by the auto zero signal XAZ.

The comparison circuit 66 compares the differential signal Vout with a threshold voltage Vhigh or Vlow and outputs an event signal COMP+ or COMP-.

The photoelectric conversion element 63 includes an anode and a cathode. One (for example, the cathode) of the anode and the cathode of the photoelectric conversion element 63 is connected to the source of the transfer transistor Q1 in the transfer unit 62a. The other (for example, the anode) is connected to a predetermined reference voltage node such as a ground voltage.

The transfer unit 62a in the logarithmic response unit 62 includes a transfer transistor Q11. As the transfer transistor Q11, for example, an NMOS transistor is used. The transfer transistor Q11 is used for switching transfer of the photocharges. The source of the transfer transistor Q11 is connected to the cathode of the photoelectric conversion element 63. The transfer transistor Q11 is turned on, for example, by a high-level transfer signal being input to the gate. A drain of the transfer transistor Q11 is connected to an input node n11 of the charge-to-voltage conversion unit 62b.

The charge-to-voltage conversion unit 62b in the logarithmic response unit 62 converts the charges accumulated in the photoelectric conversion element 63 into a voltage. The charge-to-voltage conversion unit 62b includes transistors Q12 to Q16. As the transistors Q12 to Q15, for example, an NMOS transistor is used. As the transistor Q16, for example, a PMOS transistor is used.

The transistors Q12 and Q13 are cascode-connected between a power supply voltage node and the drain of the transfer transistor Q11. The source of the transistor Q12 is connected to the drain of the transfer transistor Q11 and connected to the gate of the transistor Q14. The gate of the transistor Q12 is connected to the drain of the transistor Q14 and connected to the source of the transistor Q15. The drain of the transistor Q12 is connected to the source of the transistor Q13 and connected to the gate of the transistor Q15. The drain of the transistor Q13 is connected to a power supply voltage node. The gate of the transistor Q13 is connected to an output node n12 of the charge-to-voltage conversion unit 62b, the drain of the transistor Q15, and the drain of the transistor Q16.

The transistor Q14 and the transistor Q15 are cascode-connected between the node n12 and the reference voltage (ground) node. The source of the transistor Q14 is connected to the reference voltage (ground) node. The transistor Q15 is arranged between the transistors Q14 and Q16.

The source of the transistor Q16 is connected to the power supply voltage node. A bias voltage Vblog is input to the gate of the transistor Q16. The transistor Q16 adjusts a voltage level at the output node n12 by a voltage level of the bias voltage Vblog.

The voltage signal Vlog subjected to the logarithmic conversion by the charge-to-voltage conversion unit 62b is input to the buffer 64. The buffer 64 includes transistors Q17 and Q18. The transistors Q17 and Q18 are cascode-connected between the power supply voltage node and the reference voltage (for example, ground) node. As the transistor Q17, for example, a PMOS transistor is used. As the transistor Q18, for example, an NMOS transistor is used.

The transistor Q17 in the buffer 64 constitutes a source follower circuit. A pixel voltage Vsf corresponding to the voltage signal Vlog output from the charge-to-voltage conversion unit 62b is output from the buffer 64. The voltage signal Vlog is input to the gate of the transistor Q17 from the output node n12 of the charge-to-voltage conversion unit 62b. The source of the transistor Q17 is connected to the power supply voltage node. The drain of the transistor Q17 is connected to the drain of the transistor Q18 and connected to an input node of the differentiating circuit 65 via an output node n13 of the buffer 64.

The source of the transistor Q18 is connected to the reference voltage (ground) node. A bias voltage Vbsf is input to the gate of the transistor Q18. The transistor Q18 adjusts a voltage level at the output node n13 by a voltage level of the bias voltage Vbsf.

The pixel voltage Vsf output from the buffer 64 is input to the differentiating circuit 65. The buffer 64 can improve driving force of the pixel voltage Vsf. Furthermore, by providing the buffer 64, it is possible to secure isolation that prevents noise generated when the differentiating circuit 65 at the subsequent stage performs switching operation from being transmitted to the charge-to-voltage conversion unit 62b.

The differentiating circuit 65 generates a differential signal Vout in accordance with change in the pixel voltage Vsf output from the buffer 64. The differentiating circuit 65 includes a capacitor C1 and transistors Q19 to Q21. As the transistors Q19 and Q21, for example, an NMOS transistor is used. As the transistor Q20, for example, a PMOS transistor is used.

The capacitor C1 is arranged between a connection node n14 and the output node n13. The connection node n14 is a connection node between the drain of the transistor Q19 and the gate of the transistor Q20. The capacitor C1 accumulates charges on the basis of the pixel voltage Vsf output from the buffer 64. The capacitor C1 supplies charges according to a change amount of the pixel voltage Vsf (obtained by temporally differentiating the pixel voltage Vsf) to the gate of the transistor Q20.

The capacitor C2 is connected between the gate of the transistor Q20 and the drain of the transistor Q21.

The transistor Q19 switches whether or not to short-circuit the gate of the transistor Q20 and the drain of the transistor Q20 in accordance with the auto zero signal XAZ. The auto zero signal XAZ is a signal to give an instruction for initialization, and for example, changes from a high level to a low level every time an event signal to be described later is output from the event detection pixel 61. When the auto zero signal XAZ becomes a high level, the transistor Q19 is turned on. As a result, the differential signal Vout is set to an initial value, and the charges of the capacitor C2 are initialized.

The source of the transistor Q21 is connected to the reference voltage (ground) node. A bias voltage Vbdiff is input to the gate of the transistor Q21. The transistor Q21 adjusts a voltage level at an output node n15 of the differentiating circuit 65 in accordance with a voltage level of the bias voltage Vbdiff.

The transistors Q20 and Q21 function as an inverting circuit having the connection node n14 on the gate side of the transistor Q20 as an input node and the connection node n15 of the transistors Q20 and Q21 as an output node.

As described above, the differentiating circuit 65 detects a change amount of the pixel voltage Vsf by differential operation. The change amount of the pixel voltage Vsf indicates a change amount of luminance of incident light on the event detection pixel 61. The differentiating circuit 65 outputs the differential signal Vout to the comparison circuit 66 via the output node n15.

The comparison circuit 66 compares the differential signal Vout with a threshold voltage. The comparison circuit 66 outputs the event signal COMP+ and the event signal COMP- on the basis of the comparison result. The comparison circuit 66 includes transistors Q22 to Q25 and an inverter K1. As the transistors Q22 and Q24, for example, a PMOS transistor is used. As the transistors Q23 and Q25, for example, an NMOS transistor is used.

The transistors Q22 and Q23 are cascode-connected between the power supply voltage node and the reference voltage (for example, ground) node. The source of the transistor Q22 is connected to the power supply voltage node. The drain of the transistor Q22 is connected to the inverter K1 and connected to the drain of the transistor Q23. The source of the transistor Q23 is connected to the reference voltage (ground) node. The differential signal Vout of the differentiating circuit 65 is input to the gate of the transistor Q22. A threshold voltage Vhigh is input to the gate of the transistor Q23.

The transistors Q22 and Q23 compare the differential signal Vout with the threshold voltage Vhigh. Specifically, if the differential signal Vout is lower than the threshold voltage Vhigh, the transistor Q22 is turned on. As a result, the low-level event signal COMP+ is output from the drain of the transistor Q22 via the inverter K1.

The transistors Q24 and Q25 are cascode-connected between the power supply voltage node and the reference voltage (for example, ground) node. The source of the transistor Q24 is connected to the power supply voltage node. The drain of the transistor Q24 is connected to the output node of the comparison circuit 66 and connected to the drain of the transistor Q25. The differential signal Vout of the differentiating circuit 65 is input to the gate of the transistor Q24. A threshold voltage Vlow is input to the gate of the transistor Q25.

The transistors Q24 and Q25 compare the differential signal Vout with the threshold voltage Vlow. Specifically, if the differential signal Vout of the differentiating circuit 65 is higher than the threshold voltage Vlow, the transistor Q24 is turned off. As a result, the low-level event signal COMP- is output from the drain of the transistor Q24.

The event detection pixel circuit 23a (event detection circuit 23) detects, as an event, that an absolute value of the change amount of luminance of the incident light has exceeded a threshold. If the luminance of the light incident on the event detection pixel 61 increases, charges (hereinafter, photocharges) according to the luminance of the incident light are generated by the photoelectric conversion element 63. As a result, the voltage of the input node n11 connected to the cathode of the photoelectric conversion element 63 decreases. As the voltage of the input node n11 decreases, the output voltage Vlog of the charge-to-voltage conversion unit 62b increases, and the pixel voltage Vsf of the buffer 64 decreases. The differential signal Vout output from the differentiating circuit 65 increases in accordance with an amount of decrease of the pixel voltage Vsf. If the differential signal Vout exceeds the threshold voltage Vhigh, the low-level event signal COMP+ is output. In other words, the low-level event detection signal COMP+ indicates a state where an amount of increase of the luminance of the incident light exceeds a threshold determined by the threshold voltage Vhigh.

Similarly, if the luminance of the light incident on the event detection pixel 61 decreases, the differential signal Vout output from the differentiating circuit 65 decreases. If the differential signal Vout falls below the threshold voltage Vlow, the low-level event signal COMP- is output. In other words, the low-level event detection signal COMP- indicates a state where an amount of decrease of the illuminance of the incident light falls below the threshold determined by the threshold voltage Vlow.

Detection of the event in the present specification indicates output of one of the low-level event detection signal COMP+ or the low-level event detection signal COMP-. In addition, the event image data can include polarity information indicating positive or negative of the luminance of the incident light. Furthermore, in the present specification, the event signal COMP+ and the event signal COMP- are collectively referred to as an event signal COMP.

The event detection pixel circuit 23a does not have to output both the event signal COMP+ and the event signal COMP- and may output one of them. For example, the transistors Q24 and Q25 may be omitted from the comparison circuit 66. In this case, the comparison circuit 66 is configured to output the event signal COMP+. As a result, the event detection pixel circuit 23a detects increase between increase and decrease of the luminance of the incident light of the photoelectric conversion element 63.

Similarly, the transistors Q22 and Q23 and the inverter K1 may be omitted from the comparison circuit 66. In this case, the event detection pixel circuit 23a detects decrease between increase and decrease of the luminance of light of the photoelectric conversion element 63 and outputs the event signal COMP-.

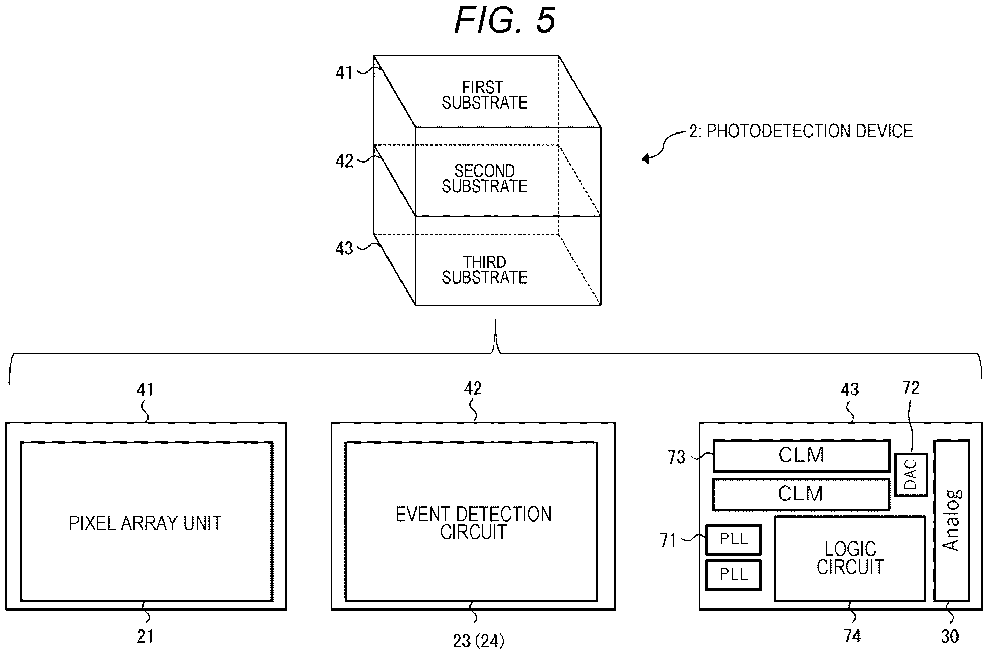

Fig. 5 is a view illustrating a stacked structure of the photodetection device of the photodetection device 2 according to the first embodiment and a layout configuration of each substrate. The photodetection device 2 is configured by a first substrate 41, a second substrate 42, and a third substrate 43 being stacked in this order. Note that in the photodetection device 2, four or more semiconductor substrates may be stacked. For example, the photodetection device 2 may include another semiconductor substrate stacked between the first substrate 41 and the second substrate 42. Alternatively, the photodetection device 2 may include another semiconductor substrate stacked between the second substrate 42 and the third substrate 43.

The pixel array unit 21 is arranged in substantially the entire region of the first substrate 41. The event detection circuit 23 is arranged in substantially the entire region of the second substrate 42. The event detection circuit 23 in Fig. 5 includes the event buffer 24. The third substrate 43 includes a phase-locked loop (PLL) 71, a digital-to-analog converter (DAC) 72, a column processing circuit (CLM) 73, a logic circuit 74, and an analog processing unit (Analog) 30. The column processing circuit 73 includes the AD conversion unit 26 in Fig. 2. The logic circuit 74 includes the control unit 22, the event processing unit 25, the line buffer 27, the reordering unit 28, the signal processing unit 29, and the digital processing unit 31 in Fig. 2. Hereinafter, the control unit 22, and the like, in Fig. 2 may be collectively referred to as a logic circuit 74 for the sake of simplicity in the present specification. Note that the third substrate 43 includes an output unit 32 (not illustrated in Fig. 5).

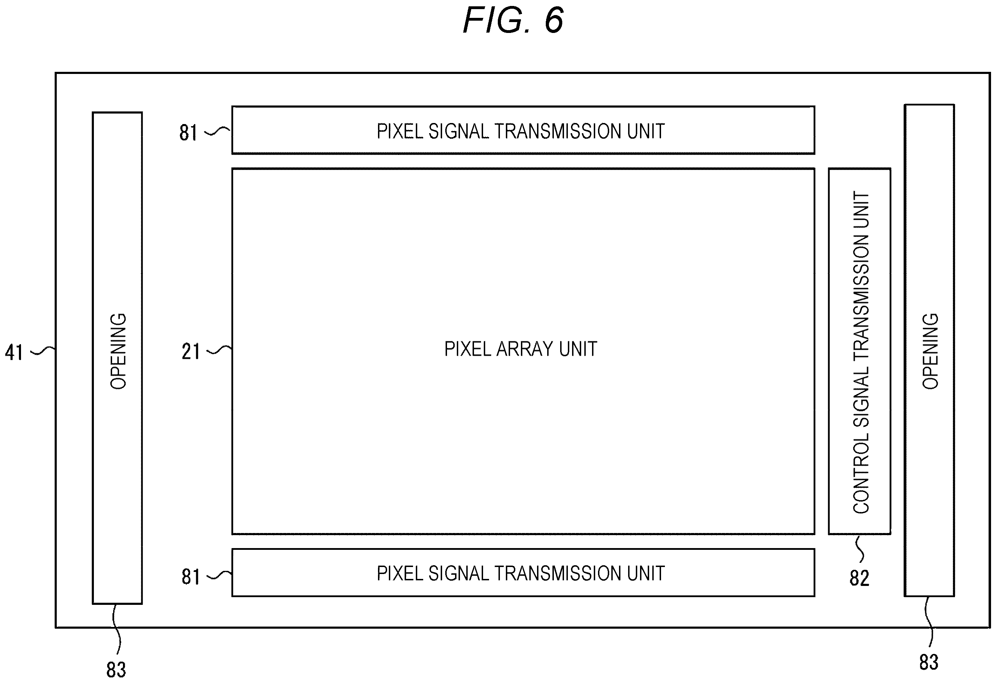

Fig. 6 is a block diagram illustrating a detailed configuration example of the first substrate 41. The pixel array unit 21 is arranged at the central portion of the first substrate 41.

A plurality of pixel signal transmission units (second transmission units) 81 is arranged along two facing sides of the first substrate 41. The pixel signal transmission unit 81 is a signal path that transmits the plurality of pixel signals Vimg output from the plurality of gradation pixel circuits 52 in the pixel array unit 21 to the third substrate 43. The pixel signal transmission unit 81 is arranged so as to reach the third substrate 43 from the first substrate 41 via the second substrate 42.

The pixel signal transmission unit 81 is configured with, for example, through silicon via (TSV) and copper-copper connection (CCC). Specifically, the pixel signal transmission unit 81 is transmitted between the first substrate 41 and the second substrate 42 using CCC for bonding the Cu pads to each other. The pixel signal transmission unit 81 is transmitted to the third substrate 43 using TSV penetrating the second substrate 42 and CCC for bonding Cu pads via Cu pads bonded to TSV between the second substrate 42 and the third substrate 43.

The control signal transmission unit (third transmission unit) 82 is arranged along one of two sides of the first substrate 41 different from the two sides on which the pixel signal transmission unit 81 is arranged. The control signal transmission unit 82 is a signal path that transmits a control signal from the third substrate 43 to each of the gradation pixels 51 (or the gradation pixel circuit 52) of the first substrate 41. The control signal includes a plurality of signals for controlling at least one of the photoelectric conversion element 53 or the gradation pixel circuit 52. The control signal is, for example, a selection signal SEL, a reset signal RST, a transfer signal TRG, or the like. The control signal transmission unit 82 is arranged so as to reach the first substrate 41 from the third substrate 43 via the second substrate 42. Similarly to the pixel signal transmission unit 81, the control signal transmission unit 82 transmits the control signal from the first substrate 41 to the third substrate 43 via the second substrate 42 using TSV and CCC.

Two openings 83 are arranged along two sides of the first substrate 41 different from the two sides on which the pixel signal transmission unit 81 is arranged. A plurality of bonding wires connected to PADs on the second substrate 42 to be described later is arranged in the openings 83.

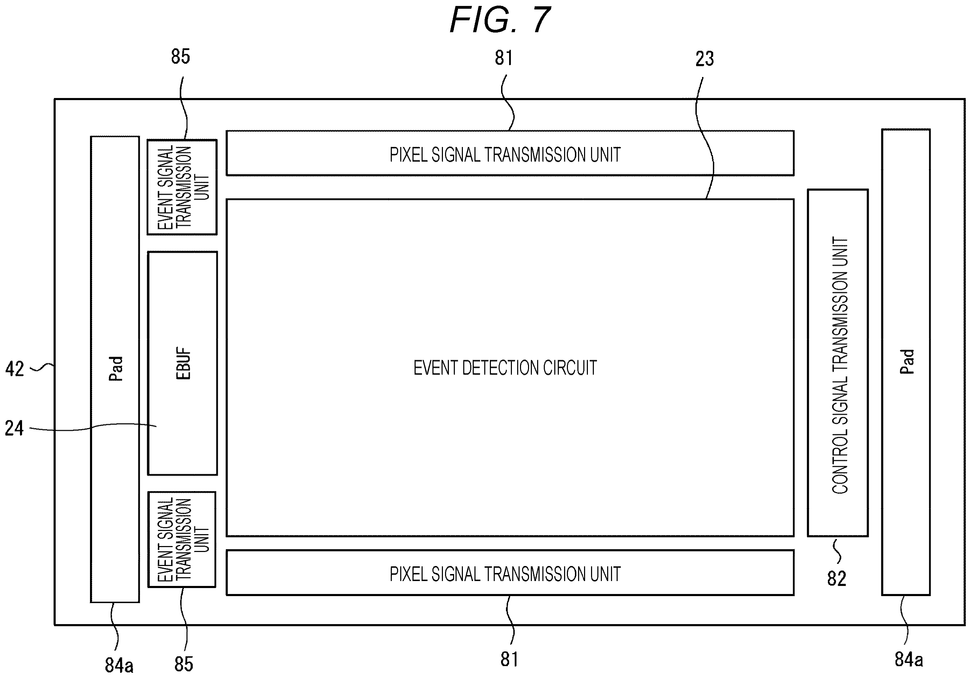

Fig. 7 is a block diagram illustrating a first example of a detailed configuration of the second substrate 42. As described above, the pixel signal transmission unit 81 and the control signal transmission unit 82 are arranged on the second substrate 42.

The event detection circuit 23 is arranged at the central portion of the second substrate 42. The event detection circuit 23 and the pixel array unit 21 are arranged so as to overlap with each other in plan view.

On the second substrate 42, a plurality of PADs (first pads) 84a is arranged so as to overlap with the plurality of openings 83 on the first substrate 41 in plan view. The other end of the bonding wire having one end connected to the PAD 84a is connected to an external connection terminal via the opening 83.

On the second substrate 42, for example, a plurality of event signal transmission units (first transmission units) 85 is arranged along one of two sides on which the PADs 84a are arranged. The event signal transmission unit 85 is a signal path that transmits the event signal COMP output from the event detection circuit 23 from the second substrate 42 to the third substrate 43. The event signal transmission unit 85 includes a plurality of vias connecting the second substrate 42 and the third substrate 43.

On the second substrate 42, an event buffer (EBUF) 24 is arranged, for example, along one side between the two sides on which the PADs 84a are arranged. The event buffer 24 in Fig. 7 is arranged between the two event signal transmission units 85. The event buffer 24 temporarily stores the event signal COMP output from the event detection circuit 23 and performs predetermined buffer processing on the event signal COMP. The event buffer 24 outputs the event signal COMP subjected to the buffer processing to the event signal transmission unit 85. Details of the buffer processing will be described later. The event signal transmission unit 85 is transmitted from the second substrate 42 to the third substrate 43 via, using, example, TSV penetrating the second substrate 42 and CCC for bonding the Cu pads to each other via the Cu pads bonded to the TSV.

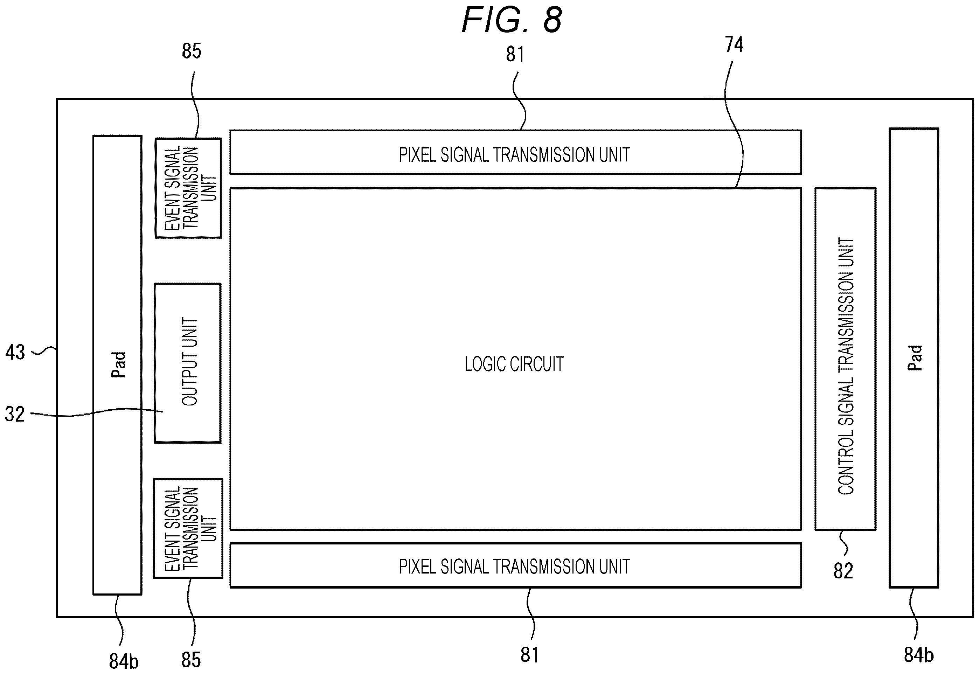

Fig. 8 is a block diagram illustrating a detailed configuration example of the third substrate 43. As described above, the pixel signal transmission unit 81, the control signal transmission unit 82, and the event signal transmission unit 85 are arranged on the third substrate 43. In addition, the logic circuit 74 is arranged at the central portion of the third substrate 43.

To the logic circuit 74, the pixel signal Vimg is input from the pixel signal transmission unit 81, and the event signal COMP is input from the event signal transmission unit. The logic circuit 74 generates gradation image data and event image data on the basis of the pixel signal Vimg and the event signal COMP. In addition, the logic circuit 74 generates a control signal and outputs the control signal to the control signal transmission unit.

On the third substrate 43, a plurality of PADs (second pads) 84b is arranged so as to overlap with the plurality of PADs 84a on the second substrate 42 in plan view. The PADs 84b are electrically connected to the corresponding PADs 84a by a conductive member such as a via or a bump.

On the third substrate 43, the output unit 32 is arranged along the side on which the event signal transmission unit 85 is arranged. The output unit 32 includes a communication interface circuit for transmitting the gradation image data and the event image data output from the logic circuit 74 to the outside of the photodetection device 2.

As described above, the PADs 84b, the output unit 32, and the event signal transmission unit 85 are arranged along one side among the sides of the third substrate 43. In the present specification, this side is referred to as a first side, and one side of the third substrate 43 on which the control signal transmission unit 82 is arranged is referred to as a second side. The pixel signal transmission unit 81 is arranged along two sides of the third substrate 43 other than the first side and the second side.

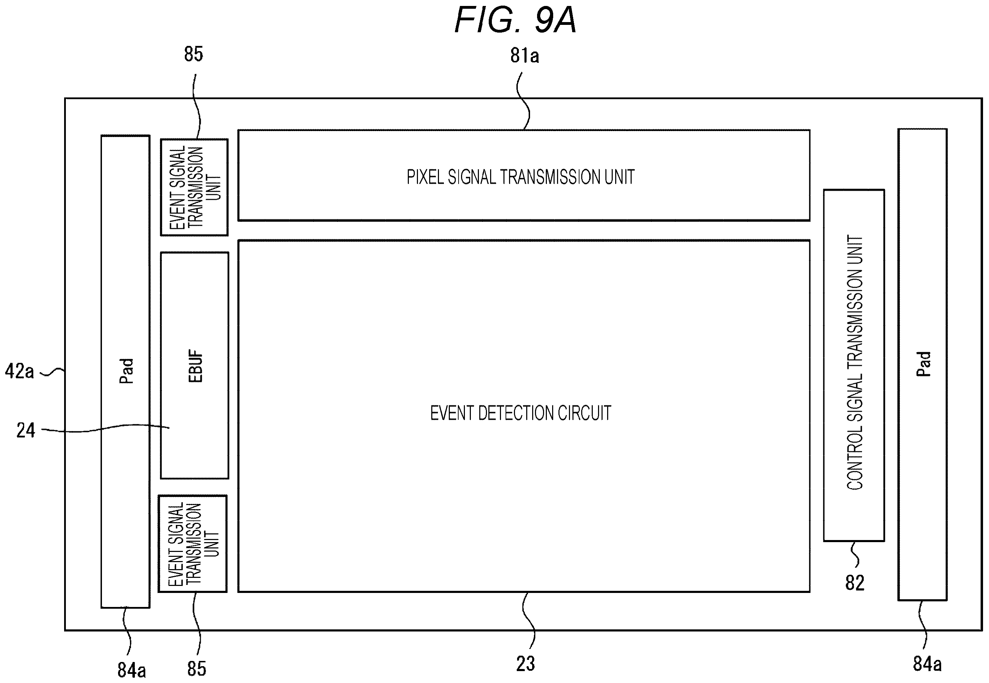

Fig. 7 illustrates an example in which the plurality of pixel signal transmission units 81 is arranged on two sides facing each other of the second substrate 42, but the present disclosure is not limited thereto. Fig. 9A is a block diagram illustrating a second example of a detailed configuration of the second substrate 42. On the second substrate 42a illustrated in Fig. 9A, the pixel signal transmission unit 81a is arranged only on one side different from the plurality of sides on which the plurality of PADs 84a is arranged.

In this case, on the first substrate 41, one pixel signal transmission unit 81a is arranged on one side different from the plurality of sides on which the plurality of openings 83 is arranged. Further, on the third substrate 43, one pixel signal transmission unit 81a is arranged on one side different from the plurality of sides on which the plurality of PADs 84b is arranged. In other words, the pixel signal transmission units 81a which are arranged on the first substrate 41, the second substrate 42, and the third substrate 43 are arranged so as to overlap with each other in plan view.

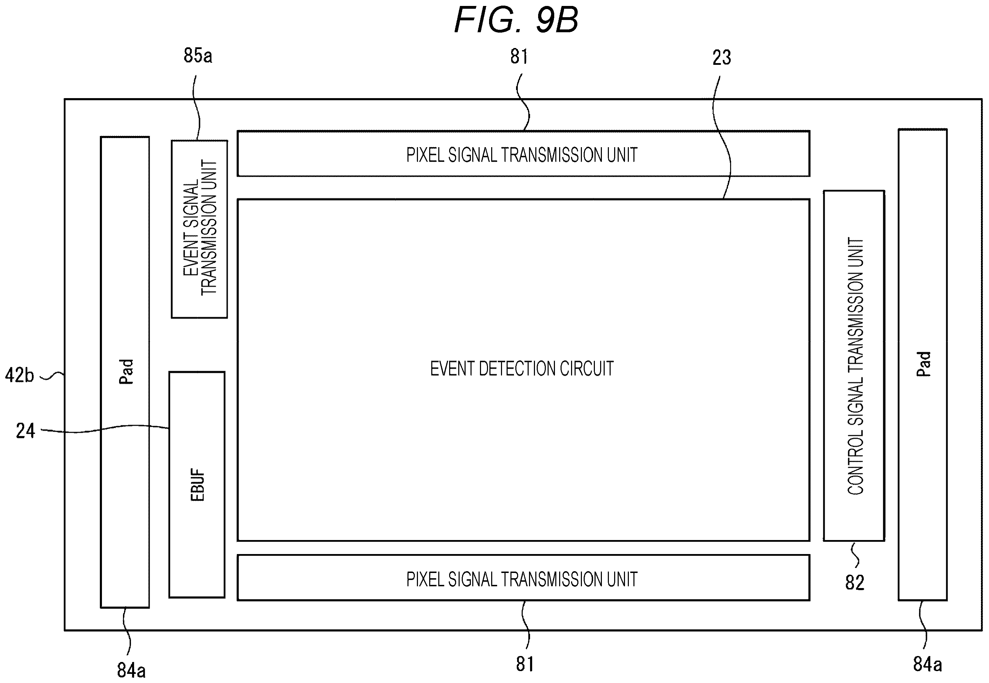

Fig. 7 illustrates an example in which the plurality of event signal transmission units 85 is arranged on the second substrate 42, but the present disclosure is not limited thereto. Fig. 9B is a block diagram illustrating a third example of the detailed configuration of the second substrate 42. On the second substrate 42b illustrated in Fig. 9B, the event signal transmission unit 85a is arranged only at one end portion of one side among the plurality of sides on which the PADs 84a are arranged. The event buffer 24 is arranged at one end of the one side different from the one end at which the event signal transmission unit 85a is arranged. In this case, on the third substrate 43, the event signal transmission unit 85a is arranged at a position overlapping with the event signal transmission unit 85a on the second substrate 42b in plan view.

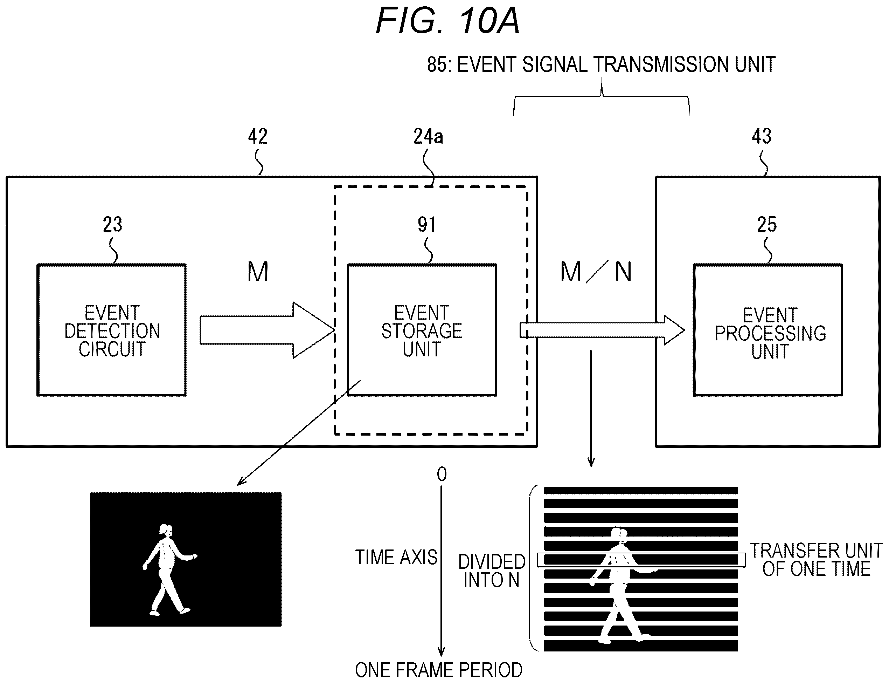

Fig. 10A is a block diagram illustrating a first configuration example of the event buffer 24 and its peripheral portion. The event buffer 24a in Fig. 10A includes an event storage unit 91. The event storage unit 91 stores a plurality of event signals COMP generated by the event detection circuit 23 within a predetermined period (for example, one frame period). The event image data has a smaller data amount than the gradation image data, and thus requires small storage capacity of the event storage unit 91. In addition, the event signal transmission unit 85 divides the event signal COMP stored in the event storage unit 91 into a predetermined number of times of transmission in chronological order (for example, order of output from the event detection circuit 23) and transmits the divided event signals COMP. The event signal transmission unit 85 transmits the divided event signals COMP to the event processing unit 25 in the third substrate 43.

As illustrated in Fig. 10A, the event detection circuit 23 that outputs event signal COMP is arranged on the second substrate 42. Further, the logic circuit 74 that performs signal processing on the event signal COMP is arranged on the third substrate 43. In this event, the event signal COMP is transmitted from the second substrate 42 to the third substrate 43 by the event signal transmission unit 85.

In this case, the number of transmission lines arranged in the event signal transmission unit 85 is a problem. In a case where the number of transmission lines of the event signal transmission unit 85 is large, an area of the event signal transmission unit 85 increases, and the required area of the second substrate 42 also increases. This deteriorates a theoretical yield of the photodetection device 2.

As illustrated in Fig. 10A, the event signal transmission unit 85 divides the event signal COMP and transmits the divided event signals COMP, so that the number of event signals COMP transmitted at one time can be reduced. This can reduce the number of transmission lines arranged in the event signal transmission unit 85.

Fig. 10A illustrates an example in which the number of event signals COMP to be transmitted from the event detection circuit 23 to the event processing unit 25 is M. In other words, it is necessary to provide M signal paths (first signal lines) from the event detection circuit 23 to the event storage unit 91. In a case where nothing is devised, it is necessary to provide M signal paths (second signal lines) between the second substrate 42 and the third substrate 43, but the event signal transmission unit 85 according to the present embodiment transmits the event signal COMP of one frame period N times. This can reduce the number of the second signal lines to M/N.

As described above, the number of the second signal lines can be reduced as the number of times of transmission of the event signal COMP increases. On the other hand, as the number of times of transmission of the event signal COMP increases, a transmission period of the event signal COMP increases.

The event signal COMP generated in one frame period needs to be transmitted in one frame period. Here, as a result of the amount of data of the event signal COMP transmitted once being reduced, the number of times of transmission of the event signal COMP can be increased.

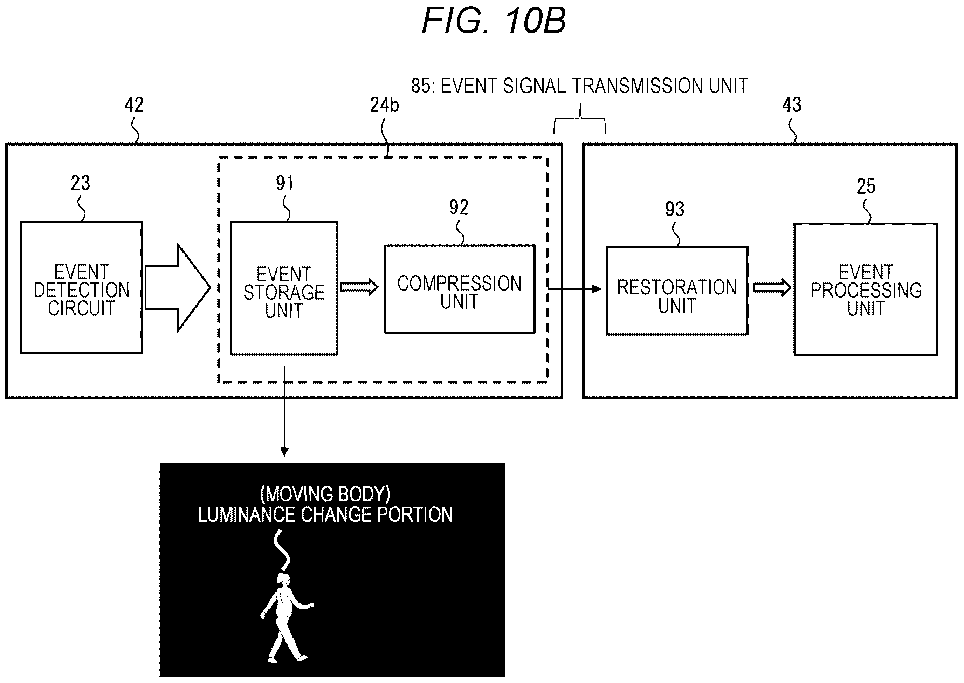

Fig. 10B is a block diagram illustrating a second configuration example of the event buffer 24 and its peripheral portion. The event buffer 24b in Fig. 10B includes a compression unit 92. In addition, the third substrate 43 includes a restoration unit 93. The compression unit 92 compresses the plurality of event signals COMP output from the event storage unit 91. The event signal output from the event detection circuit 23 is a signal of one to two bits, and a bit value of the event signal of a pixel in which the event has not occurred is fixed. Thus, there is a possibility that a signal amount can be greatly reduced by compressing the event signal corresponding to one frame by the compression unit 92.

The compression unit 92 outputs the compressed event signal COMP to the event signal transmission unit 85. The event signal transmission unit 85 transmits the compressed event signal COMP to the third substrate 43. The restoration unit 93 of the third substrate 43 restores the event signal COMP compressed by the compression unit 92. The event processing unit 25 performs predetermined signal processing on the plurality of event signals COMP restored by the restoration unit 93.

As described above, the event signal COMP is detected by luminance change. In an imaging scene of the photodetection device 2, luminance change is likely to occur, that is, an event is likely to occur in a moving body portion. On the other hand, in a stationary body portion, luminance change hardly occurs, and an event hardly occurs. In other words, as a ratio of the stationary body portion in the imaging scene increases, the compression unit 92 can efficiently compress the event signal COMP.

By the compression unit 92 compressing the event signal COMP, the transmission period of the event signal COMP is reduced. It is therefore possible to reduce a period required for transmitting the event signal corresponding to one frame even if the event signal is divided and transmitted as illustrated in Fig. 10A.

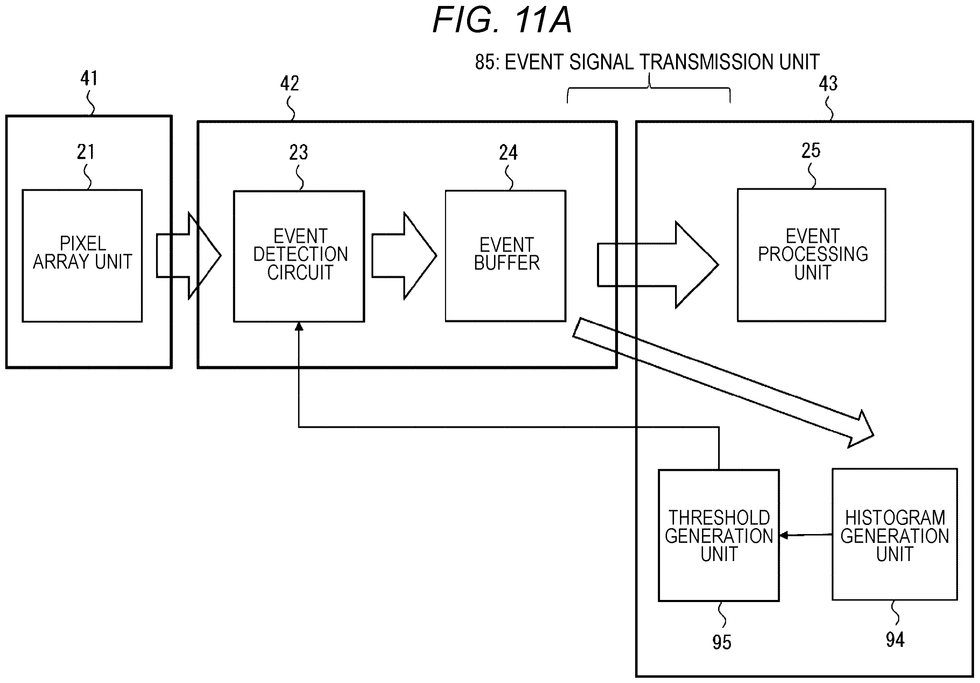

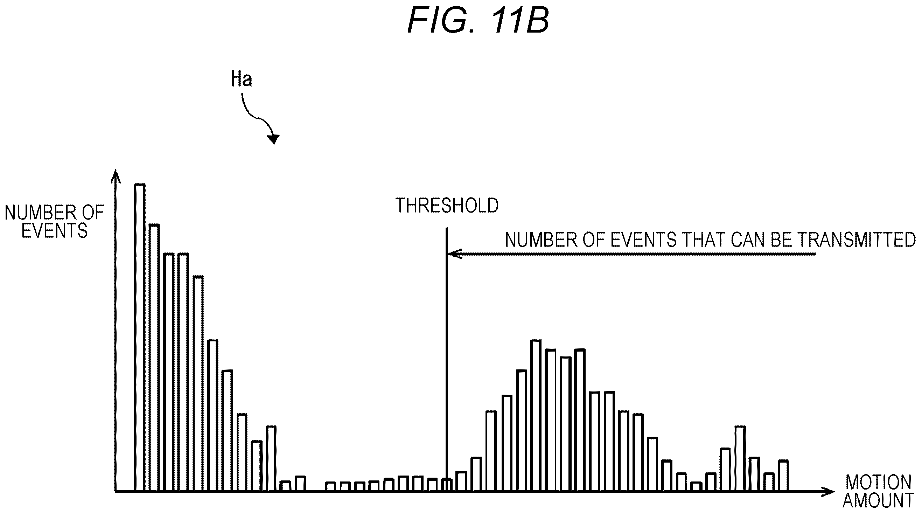

In addition, the photodetection device 2 may reduce the number of the event signals COMP output from the event detection circuit 23. Fig. 11A is a block diagram illustrating a first configuration example of the event detection circuit 23 and its peripheral portion. The third substrate 43 in Fig. 11A includes a histogram generation unit 94 and a threshold generation unit 95. Fig. 11B is a view indicating a histogram Ha generated by the histogram generation unit 94 in Fig. 11A.

The histogram generation unit 94 generates the histogram Ha on the basis of the event signal COMP output from the event detection circuit 23. On the basis of the histogram Ha, the threshold generation unit 95 determines a threshold to be used for determination as to whether the event detection circuit 23 generates the event signal COMP.

More specifically, as illustrated in Fig. 11B, the histogram generation unit 94 generates the histogram Ha representing a frequency of reception of the event signal for each motion amount. The threshold generation unit 95 sets a lower limit motion amount as the threshold in order to limit the number of event signals transmitted from the second substrate 42 on the basis of the number of events that can be transmitted within one frame period. The threshold generated by the threshold generation unit 95 is supplied to the event detection circuit 23 of the second substrate 42. Specifically, the threshold generation unit 95 outputs the threshold to the event detection circuit 23 as, for example, a threshold voltage Vhigh or Vlow. The event detection circuit 23 transmits only the event signal of the motion amount equal to or larger than the threshold to the third substrate 43.

The histogram generation unit 94 and the threshold generation unit 95 may be arranged in a place other than third substrate 43.

In addition to the above configuration, a threshold prepared in advance may be input to the event detection circuit 23 or the event buffer 24 from the outside of the photodetection device 2 regardless of the histogram Ha.

Even in a case where a subject is stationary, luminance change of the subject may occur due to, for example, a factor that the photodetection device 2 moves or light intensity of a light source that illuminates the subject changes. Thus, the photodetection device 2 may prevent an event signal that does not depend on the motion of the subject among the events detected by the event detection circuit 23 from being transmitted from the second substrate 42 to the third substrate 43.

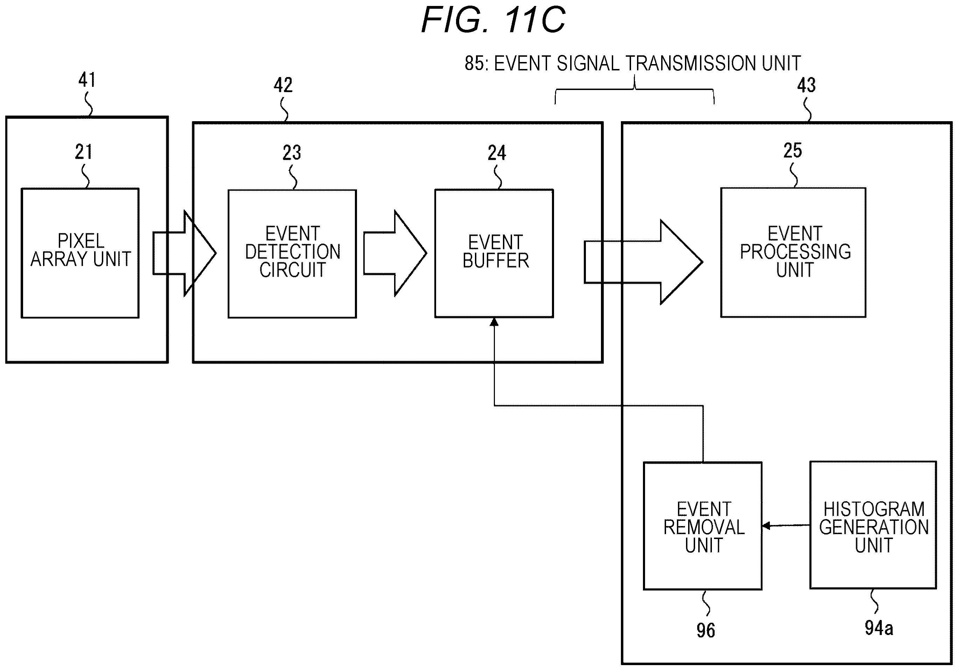

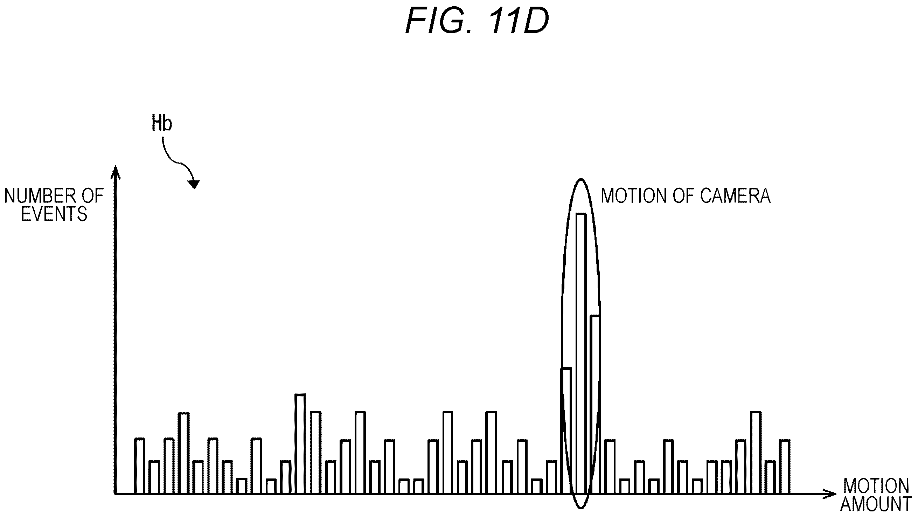

Fig. 11C is a block diagram illustrating a second configuration example of the event detection circuit 23 and its peripheral portion. The third substrate 43 in Fig. 11C includes a histogram generation unit 94a and an event removal unit 96. Fig. 11D is a view indicating a histogram Hb generated by the histogram generation unit 94a in Fig. 11C.

The event removal unit 96 extracts an event signal COMP caused by the motion of the photodetection device 2 from the histogram Hb generated by the histogram generation unit 94a, and instructs the event buffer 24 not to transmit the extracted event signal COMP to the third substrate 43. The motion of the photodetection device 2 (motion amount of the camera) is measured by, for example, a gyro sensor, or the like, arranged outside the photodetection device 2.

By the method indicated in Figs. 11A and 11C, the number of the event signals COMP transmitted from the second substrate 42 to the third substrate 43 is reduced, and a transmission period of the event signal COMP is shortened. As a result, the number of transmission lines in the event signal transmission unit 85 is reduced, or a frame rate of the photodetection device 2 is improved.

In addition, some methods of reducing the number of transmission lines in the event signal transmission unit 85 are conceivable. For example, in a case where the event signal COMP cannot be transmitted in one frame, the event buffer 24 may terminate the transmission of the event signal COMP in the frame and start transmission of the event signal COMP generated in the next frame. In addition, the photodetection device 2 may reduce the number of transmission lines in the event signal transmission unit 85 and may dynamically extend and contract one frame period according to an appearance frequency of the event. As a result, the event signal can be efficiently transmitted with a small number of transmission lines.

As described above, by providing the event buffer 24 on the second substrate 42, a necessary number of event signals can be selected and transmitted from the second substrate 42 to the third substrate 43, the number of transmission lines in the event signal transmission unit 85 can be reduced, and processing load of the event processing unit 25 can be reduced.

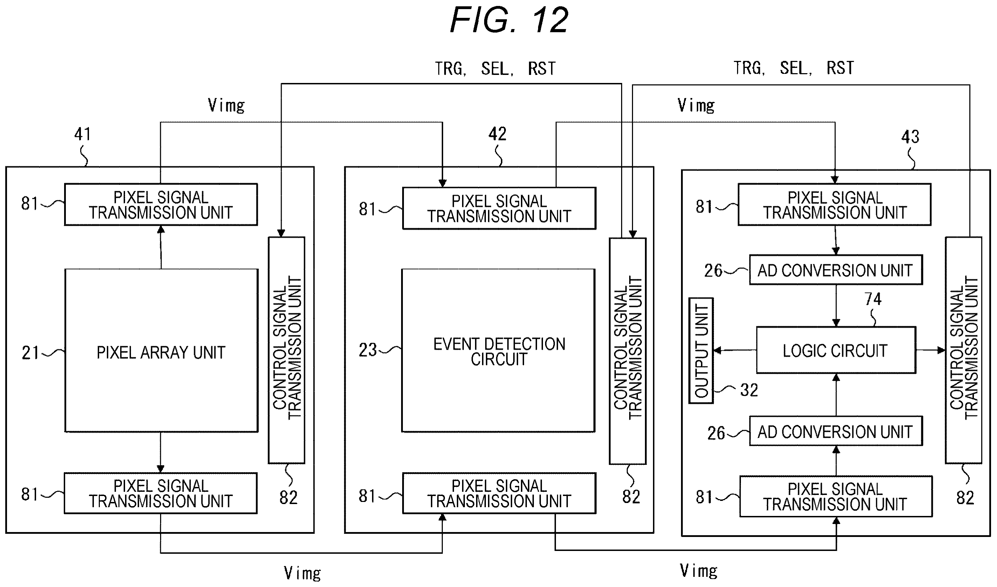

Fig. 12 is a block diagram illustrating detailed operation of the pixel signal transmission unit 81 and the control signal transmission unit 82. As described above, the pixel signal transmission unit 81 and the control signal transmission unit 82 are arranged on the first substrate 41, the second substrate 42, and the third substrate 43. The pixel signal transmission unit 81 of the second substrate 42 and the control signal transmission unit 82 of the second substrate 42 are simply used as a signal path that relays the pixel signal Vimg transmitted from the first substrate 41 to the third substrate 43.

The pixel signal transmission units 81 of the first substrate 41, the second substrate 42, and the third substrate 43 are signal paths that transmit the pixel signal Vimg output from the gradation pixel 51 (gradation pixel circuit 52) in the pixel array unit 21 from the first substrate 41 to the third substrate 43 via the second substrate 42. The AD conversion unit 26 of the third substrate 43 performs analog-to-digital conversion on the pixel signal Vimg and outputs the converted signal to the logic circuit 74. The logic circuit 74 performs predetermined signal processing on the analog-to-digital converted pixel signal Vimg to generate gradation image data. The logic circuit 74 outputs the gradation image data to the output unit 32.

The logic circuit 74 generates various control signals for controlling the pixel array unit 21 of the first substrate 41. The control signal transmission unit 82 of the third substrate 43 transmits the control signal (the transfer signal TRG, the selection signal SEL, the reset signal RST, or the like) generated by the logic circuit 74 to the first substrate 41 via the second substrate 42. The control signal transmitted by the control signal transmission unit 82 of the first substrate 41 is supplied to at least one of the gradation pixel 51 or the gradation pixel circuit 52.

As described above, by providing the pixel array unit 21 on the first substrate 41 and providing the logic circuit 74 on the third substrate 43, the event detection circuit 23 can be arranged in substantially the entire region of the second substrate 42. As a result, a useless free space is not generated in any of the first substrate 41, the second substrate 42, and the third substrate 43, the photodetection device 2 can be downsized, and a theoretical yield of the photodetection device 2 is improved.

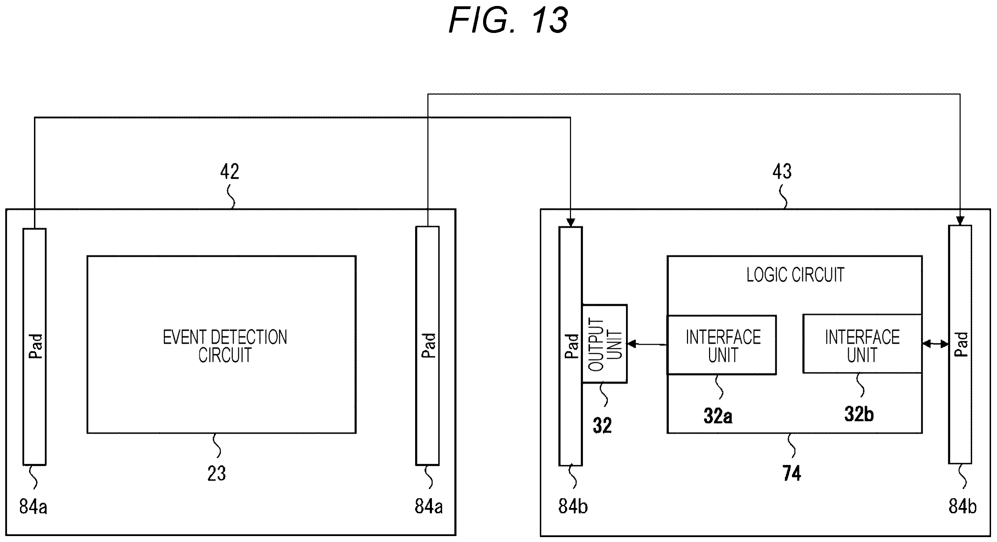

Fig. 13 is a block diagram for explaining signals transmitted and received by the PAD 84a and the PAD 84b. As described above, the PAD 84b is arranged immediately below the PAD 84a (also referred to as Pad on Pad). This minimizes a data transfer delay between the second substrate 42 and the third substrate 43. In addition, by arranging the pads 84a and 84b along the two facing sides of the second substrate 42 and the third substrate 43, it is possible to expand an arrangement region of the event detection circuit 23 of the second substrate 42 and the logic circuit 74 of the third substrate 43 without increasing outer sizes of the second substrate 42 and the third substrate 43.

The logic circuit 74 of the third substrate 43 includes interface units 32a and 32b. The interface unit 32a includes, for example, a relatively high-speed interface such as a mobile industry processor interface (MIPI). The output unit 32 is a so-called physical layer with respect to the interface unit 32a. The interface unit 32a and the output unit 32 constitute, for example, an interface unit of a physical layer of the MIPI.

The interface unit 32b includes an interface at a lower speed than a speed of the interface unit 32a, for example, an inter-integrated circuit (I2C), a serial peripheral interface (SPI), a universal asynchronous receiver/transmitter (UART), or a general purpose input/output (GPIO).

The interface unit 32a and the output unit 32 are adjacent to the PAD 84b. As a result, the output unit 32 can transmit data to the outside of the photodetection device 2 at high speed.

The data generated by the logic circuit 74 is converted into an output signal optimal for external output by the interface unit 32a. The output signal is output to the PAD 84a via the output unit 32 and the PAD 84b. The output signal is output from the PAD 84a to the outside of the photodetection device 2 via a bonding wire. In addition, a control signal for controlling the photodetection device 2 from the outside is input to the PAD 84a and is input to the logic circuit 74 via the PAD 84b.

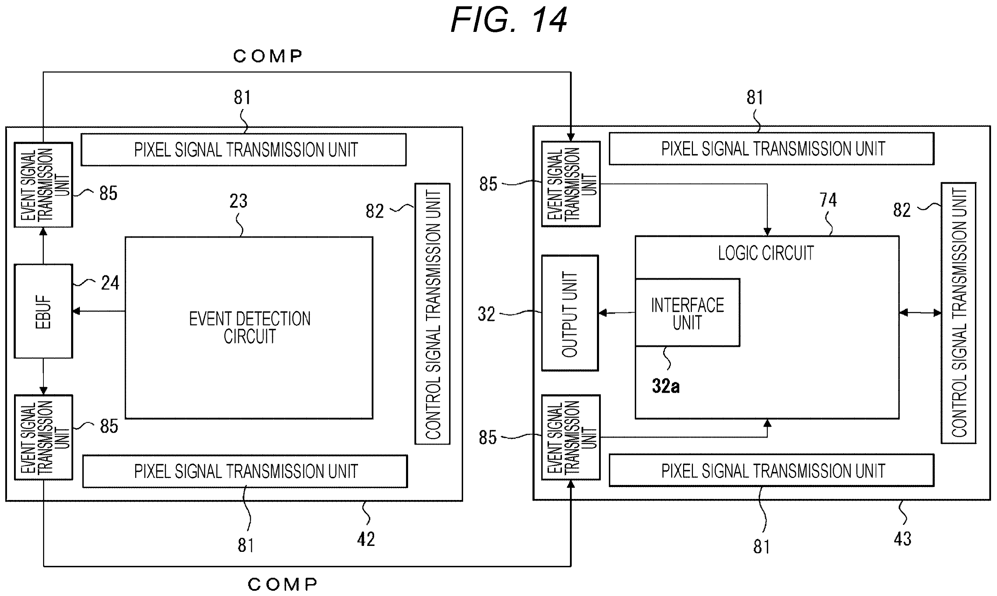

Fig. 14 is a block diagram for explaining signals transmitted and received by the output unit 32 and the event signal transmission unit 85. As described above, the event signal transmission unit 85 is a signal path that transmits the event signal COMP from the second substrate 42 to the third substrate 43.

As illustrated in Fig. 14, the pixel signal transmission unit 81 occupies most of two sides (one side in the case of the configuration of Fig. 9A) of the third substrate 43. The control signal transmission unit 82 occupies most of one side of the third substrate 43. Thus, the output unit 32 and the event signal transmission unit 85 need to be arranged on a side where the pixel signal transmission unit 81 and the control signal transmission unit 82 do not exist. Here, although Fig. 14 illustrates an example in which the output unit 32 is arranged adjacent to the event signal transmission unit 85, the arrangement is not limited thereto. The output unit 32 may be arranged on a side different from the side on which the event signal transmission unit 85 is arranged. The number of the event signals COMP transmitted by the event signal transmission unit 85 can be reduced as described above, and thus, an area of the event signal transmission unit 85 can be made smaller than areas of the pixel signal transmission unit 81 and the control signal transmission unit 82.

Note that a signal path connecting the event detection pixel 61 on the first substrate 41 and the event detection circuit 23 on the second substrate 42 may extend immediately below the event detection pixel 61. In this case, the signal path is formed using a via, a bump, a wiring, or the like, extending from the first substrate 41 to the second substrate 42. Alternatively, the transmission unit (for example, the CCC connection region) may be arranged on the first substrate 41 and the second substrate 42 so as to overlap with each other in plan view. The transmission unit may be arranged along any of the four sides of the first substrate 41 and the second substrate 42.

The voltage signal subjected to the charge-to-voltage conversion in the event detection pixel 61 is transferred to the event detection circuit 23 of the second substrate 42 via the pixel signal transmission unit 81. The event detection circuit 23 generates the event signal COMP on the basis of the transferred voltage signal. The event signal COMP is, for example, a digital signal. The event signal COMP is transmitted to the logic circuit 74 of the third substrate 43 via the event buffer 24 and the TSV and the CCC of the event signal transmission unit 85. The logic circuit 74 performs predetermined signal processing on the event signal COMP to generate event image data. The logic circuit 74 outputs the event image data to the output unit 32 via the interface unit 32a.

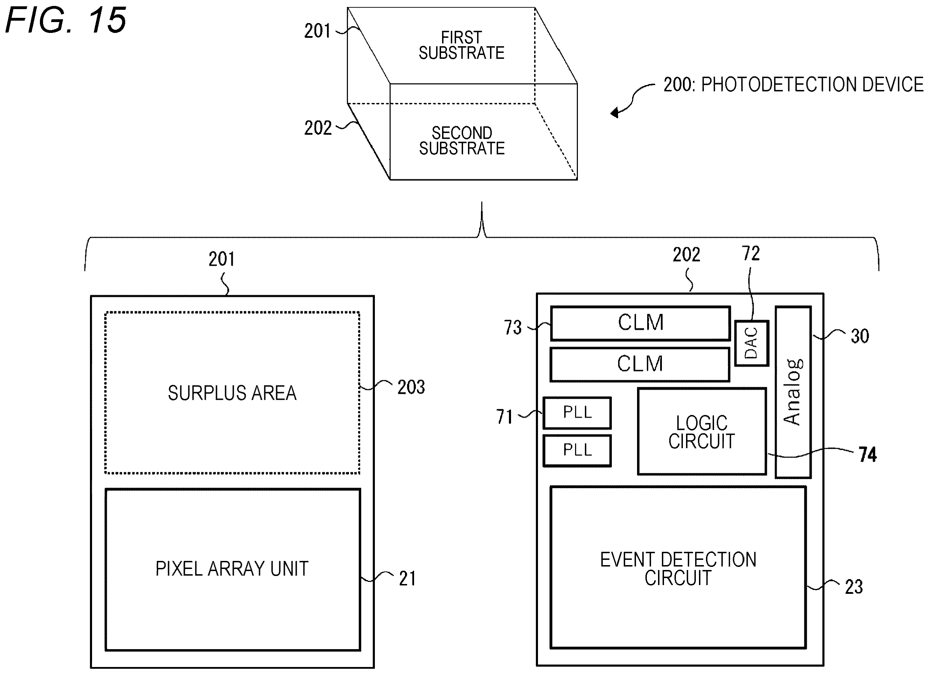

Fig. 15 is a view illustrating a stacked structure of a photodetection device 200 according to a comparative example and a configuration example of each substrate. The photodetection device 200 is different from the photodetection device 2 of the present disclosure in that the photodetection device 200 has a stacked structure of two semiconductor substrates. The photodetection device 200 is configured by stacking a first substrate 201 and a second substrate 202 in this order.

The first substrate 201 includes the pixel array unit 21. The second substrate 202 includes the event detection circuit 23, the phase-locked loop 71, the digital-to-analog conversion unit 72, the column processing circuit 73, the logic circuit 74, and the analog processing unit 30. In other words, the components of the second substrate 42 and the components of the third substrate 43 of the photodetection device 2 are arranged on the second substrate 202.

Here, the pixel array unit 21 has an area equivalent to that of the event detection circuit 23. As described above, the logic circuit 74 is arranged on the second substrate 202 in addition to the event detection circuit 23, and thus, an area of the second substrate 202 needs to be much larger than an area of the pixel array unit 21. In a case where the area of the first substrate 201 is made equal to the area of the second substrate 202, a useless surplus area 203 is generated in the first substrate 201 on which only the pixel array unit 21 is arranged. The area of the surplus area 203 corresponds to the area of the logic circuit 74, and the like. This deteriorates the theoretical yield of the photodetection device 200.

On the other hand, in the photodetection device 2, the logic circuit 74 is arranged not on the second substrate 42 but on the third substrate 43. As illustrated in Fig. 7, on the second substrate 42 of the present disclosure, only small-area members such as the transmission unit, the PAD, and the event buffer 24 are arranged in addition to the event detection circuit 23. Thus, the second substrate 42 of the present disclosure can be made smaller in size than the second substrate 202 of one comparative example. As a result, in the photodetection device 2 of the present disclosure, the sizes of the second substrate 42 and the third substrate 43 can be matched with the size of the first substrate 41 on which the pixel array unit 21 is arranged in substantially the entire region, and the first substrate 41, the second substrate 42, and the third substrate 43 can be made to the minimum necessary size, and the theoretical yield of the photodetection device 2 can be improved.

As described above, the photodetection device 2 according to the first embodiment includes the first substrate 41, the second substrate 42, and the third substrate 43 that are stacked, transmits and receives signals between the substrates using the transmission unit, or the like, and performs layout arrangement of the substrates so as not to generate a useless surplus area on the substrates. As a result, the gradation image data and the event image data can be generated without increasing the chip size, and the theoretical yield of the photodetection device 2 can be improved.

### (Second embodiment)

In the first embodiment, the example in which both the gradation pixel 51 and the gradation pixel circuit 52 are arranged on the first substrate 41 has been described, but the gradation pixel 51 and the gradation pixel circuit 52 may be arranged on different substrates.

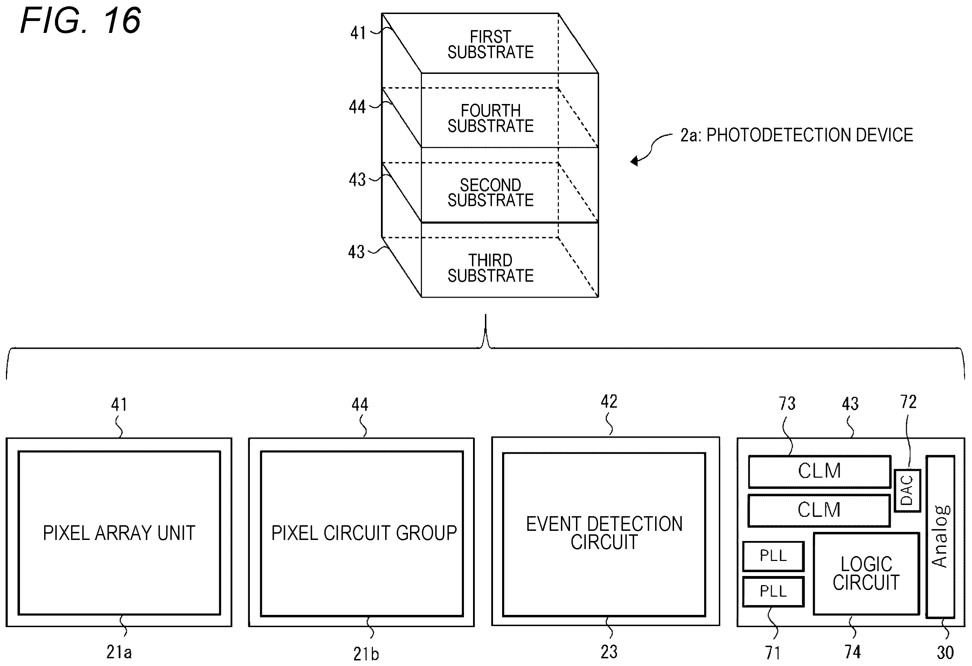

Fig. 16 is a view illustrating a stacked structure of a photodetection device 2a and a layout configuration of each substrate according to the second embodiment. The photodetection device 2a has a stacked structure of four semiconductor substrates. The photodetection device 2a includes a fourth substrate 44 between the first substrate 41 and the second substrate 42. In other words, in the photodetection device 2a, the first substrate 41, the fourth substrate 44, the second substrate 42, and the third substrate 43 are stacked in this order. Note that the photodetection device 2a may have a stacked structure of five or more layers.

The first substrate 41 of the photodetection device 2a includes a pixel array unit 21a. In the pixel array unit 21a, a plurality of gradation pixels 51 of the gradation pixels 51 and the gradation pixel circuit 52 illustrated in Fig. 3 are arranged. More specifically, for example, the photoelectric conversion element 53 and the transfer transistor Q1 are arranged in the pixel array unit 21a.

The fourth substrate 44 includes a pixel circuit group 21b. The pixel circuit group 21b includes the gradation pixel circuit 52 for each pixel. More specifically, each gradation pixel circuit 52 includes, for example, the reset transistor Q2, the amplification transistor Q3, and the selection transistor Q4.

Similarly to the gradation pixel 51 and the gradation pixel circuit 52, the event detection pixel 61 may also be arranged in a divided manner. For example, the photoelectric conversion element 63 and the transfer unit 62a may be arranged in the pixel array unit 21a. Furthermore, the charge-to-voltage conversion unit 62b may be arranged in the pixel circuit group 21b.

Similarly to the second substrate 42 of the photodetection device 2, the event detection circuit 23 is arranged on the second substrate 42 of the photodetection device 2a. Similarly to the third substrate 43 of the photodetection device 2, the logic circuit 74, and the like, are arranged on the third substrate 43 of the photodetection device 2a.

Similarly to the photodetection device 2, the configuration and arrangement of the event buffer 24 described in Fig. 10A, and the like, can be applied to the photodetection device 2a. In addition, the configurations and arrangement of the PADs 84a and 84b, the event signal transmission unit 85, the output unit 32, and the interface units 32a and 32b described in Figs. 13 and 14 can be applied to the photodetection device 2a.

The pixel signal transmission unit 81 in the photodetection device 2a is arranged so as to reach the third substrate 43 from the fourth substrate 44. The pixel signal transmission unit 81 transmits the pixel signal Vimg generated by the plurality of gradation pixel circuits 52 from the pixel circuit group 21b on the fourth substrate 44 to the logic circuit 74 on the third substrate 43.

The control signal transmission unit 82 in the photodetection device 2a is arranged so as to reach the fourth substrate 44 from the third substrate 43. The control signal transmission unit 82 may be arranged to reach the first substrate 41 from the third substrate 43 as necessary. The control signal transmission unit 82 transmits a control signal from the logic circuit 74 on the third substrate 43 to at least one of the pixel circuit group 21b on the fourth substrate 44 and the pixel array unit 21a on the first substrate 41.

Note that, in the case of Fig. 16, the pixel array unit 21a is arranged on the first substrate 41 and the pixel circuit group 21b is arranged on the fourth substrate 44 stacked on the first substrate 41, and thus, the signal path connecting the pixel array unit 21a and the pixel circuit group 21b may be arranged immediately below the pixel array unit 21a. In this case, the signal path is formed using a via, a bump, a wiring, or the like. Furthermore, the event detection circuit 23 is arranged on the second substrate 42, and thus, the signal path connecting the pixel array unit 21a and the event detection circuit 23 may be arranged in a transmission unit region arranged along at least one of four sides of the first substrate 41, the fourth substrate 44, and the second substrate 42.

As described above, in the photodetection device 2a according to the second embodiment, by arranging the gradation pixel 51 and the gradation pixel circuit 52 on different substrates, the sizes of the first substrate 41 on which the pixel array unit 21a is arranged and the fourth substrate 44 on which the pixel circuit group 21b is arranged can be further reduced. Thus, in a case where the sizes of the second substrate 42 on which the event detection circuit is arranged and the third substrate 43 on which the logic circuit 74, and the like, are arranged can be reduced so as to be matched with the sizes of the first substrate 41 and the fourth substrate 44, the photodetection device 2a can be further downsized.

### (Third embodiment)

The third embodiment embodies the content of the image processing performed by the logic circuit 74.

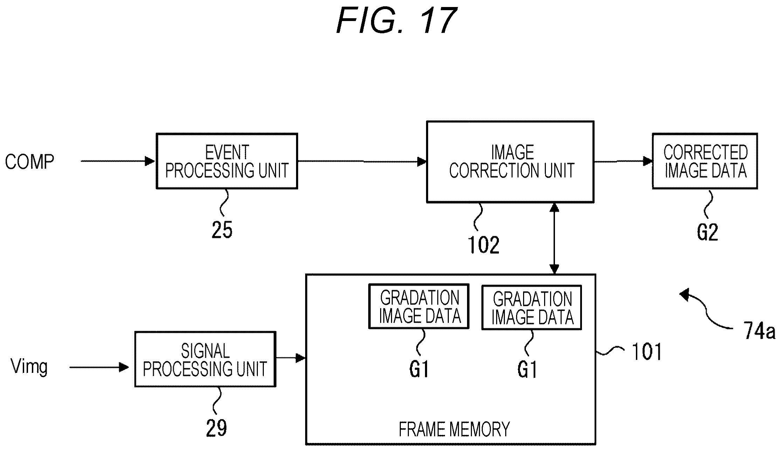

Fig. 17 is a block diagram illustrating a configuration of the logic circuit 74a in the third embodiment. The logic circuit 74a includes the event processing unit 25, the signal processing unit 29, a frame memory 101, and an image correction unit 102. Note that the logic circuit 74a includes the control unit 22, and the like, in Fig. 2 similarly to the logic circuit 74 in Fig. 5, but is not illustrated.

The frame memory 101 stores a plurality of pieces of gradation image data G1 generated for each frame by the signal processing unit 29. The frame memory 101 is, for example, an SRAM or a DRAM built in the third substrate 43. Alternatively, the frame memory 101 may be an external memory such as SRAM or DRAM arranged outside the photodetection device 2. In a case where the frame memory 101 is an external memory, the frame memory is connected to a predetermined interface unit in the photodetection device 2 by, for example, a wafer wafer on chip (WoWoC) scheme.

The image correction unit 102 corrects the gradation image data G1 output from the frame memory 101 on the basis of the event image data output from the event processing unit 25 and outputs corrected image data G2. The image correction unit 102 can directly obtain a motion vector of the subject from the event image data and can correct the gradation image data G1 on the basis of the motion vector. As a result, the image correction unit 102 can implement more accurate correction processing than a scheme in related art in which a motion vector is estimated from a plurality of past images in related art. The correction processing to be performed by the image correction unit 102 is, for example, blur correction, frame interpolation, and the like. By performing frame interpolation on the basis of the motion vector detected on the basis of the event image data, it is possible to output the gradation image data at a high frame rate while suppressing a data amount of the gradation image data, and to reduce power consumption.

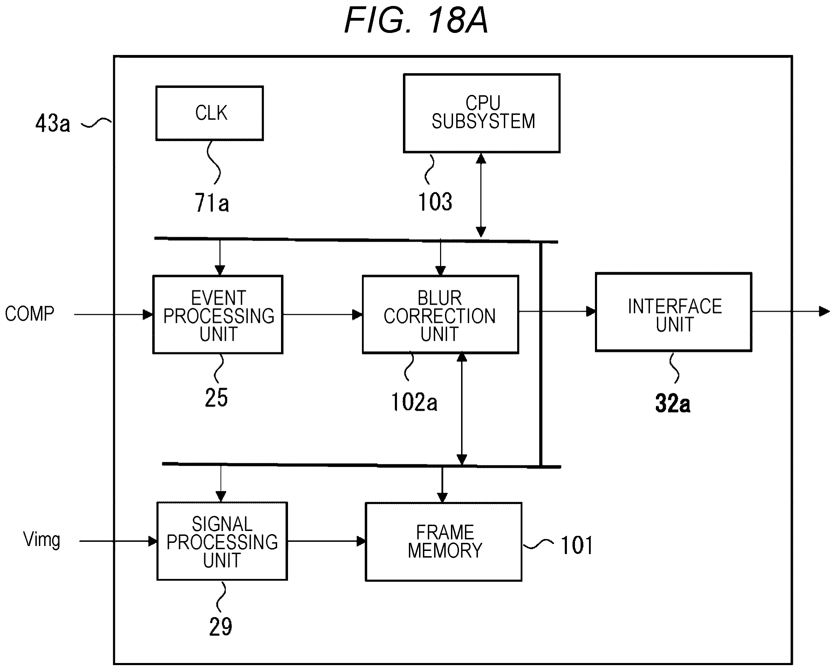

Fig. 18A is a view illustrating a first example of a configuration of the third substrate 43 according to the third embodiment. The third substrate 43a illustrated in Fig. 18A has a function of performing blur correction on the gradation image data G1. The third substrate 43a includes the event processing unit 25, the signal processing unit 29, the interface unit 32a, the clock circuit (CLK) 71a, the frame memory 101, a blur correction unit 102a, and a CPU subsystem 103.

The blur correction unit 102a acquires a plurality of pieces of gradation image data G1 via the signal processing unit 29 and the frame memory 101. In addition, the blur correction unit 102a acquires event image data via the event processing unit 25. The blur correction unit 102a performs blur correction of the plurality of pieces of gradation image data on the basis of the event image data. The photodetection device 2 can output the corrected image data G2 in which blur due to movement of the camera or the subject is corrected by the blur correction. Note that blur correction is also referred to as blur correction or deblur.

The clock circuit 71a generates a clock signal to synchronize operation of the CPU subsystem 103, the event processing unit 25, the signal processing unit 29, the frame memory 101, the blur correction unit 102a, and the like. The CPU subsystem 103 controls the event processing unit 25, the signal processing unit 29, the frame memory 101, the blur correction unit 102a, and the like. The interface unit 32a is configured with, for example, MIPI. The interface unit 32a outputs the corrected image data G2 generated by the blur correction unit 102a to outside.

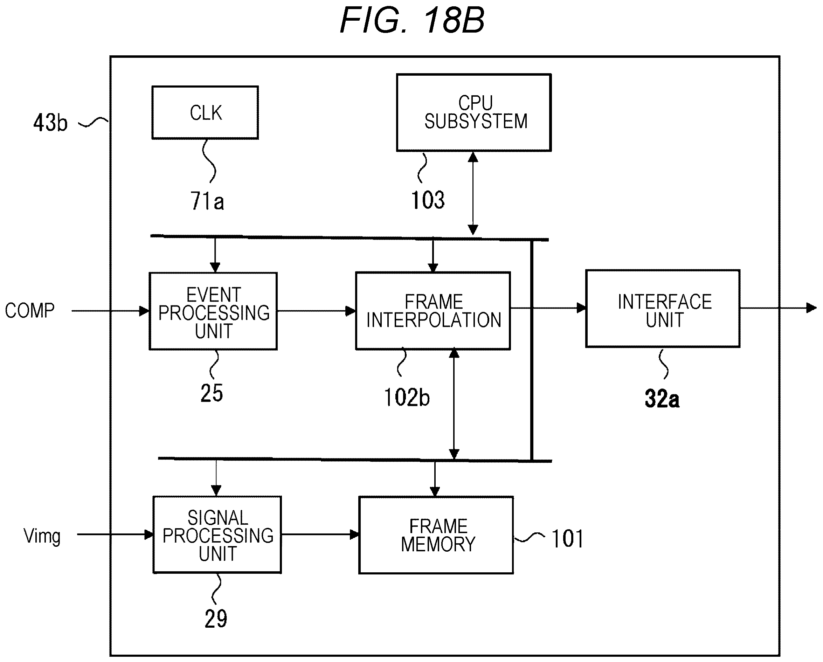

Fig. 18B is a view illustrating a second example of the configuration of the third substrate 43 according to the third embodiment. The third substrate 43b illustrated in Fig. 18B can perform frame interpolation on the gradation image data G1. The third substrate 43b includes the frame interpolation unit 102b instead of the blur correction unit 102a of the third substrate 43a. Note that both the blur correction unit 102a and the frame interpolation unit 102b may be arranged on the third substrate 43.

The frame interpolation unit 102b performs frame interpolation of the gradation image data G1 on the basis of the event image data. Specifically, the frame interpolation unit 102b generates an interpolation image between the gradation image data G1 generated in a certain frame and the gradation image data G1 generated in the next frame on the basis of the event image data. The photodetection device 2 can output the corrected image data G2 at a high frame rate by the frame interpolation even in a case where imaging of the subject is performed at a low frame rate.

As described above, in the third embodiment, the logic circuit 74 can perform various kinds of image processing on the gradation image data on the basis of the event image data. The logic circuit 74 is arranged on the third substrate 43, and the configuration of the logic circuit 74 can be variously changed without changing the first substrate 41 on which the pixel array unit 21 is arranged and the second substrate 42 on which the event detection circuit 23 is arranged.

### (Application example)

The technology in the present disclosure can be applied to various products. For example, the technology according to the present disclosure may also be implemented as a device mounted on any type of mobile body such as an automobile, an electric automobile, a hybrid electric automobile, a motorcycle, a bicycle, a personal mobility, an airplane, a drone, a ship, a robot, a construction machine, or an agricultural machine (tractor).

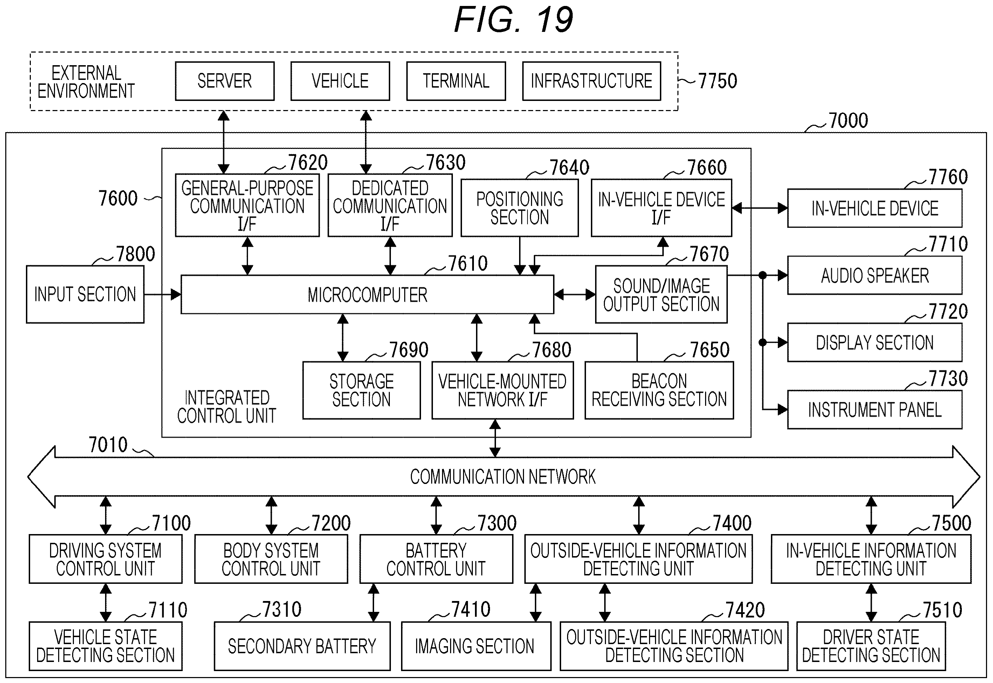

Fig. 19 is a block diagram illustrating an example of a schematic configuration of a vehicle control system 7000 as an example of a mobile body control system to which the technology according to the present disclosure can be applied. The vehicle control system 7000 includes a plurality of electronic control units connected to each other via a communication network 7010. In the example illustrated in Fig. 19, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. Functional components of the integrated control unit 7600 illustrated in Fig. 19 include a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

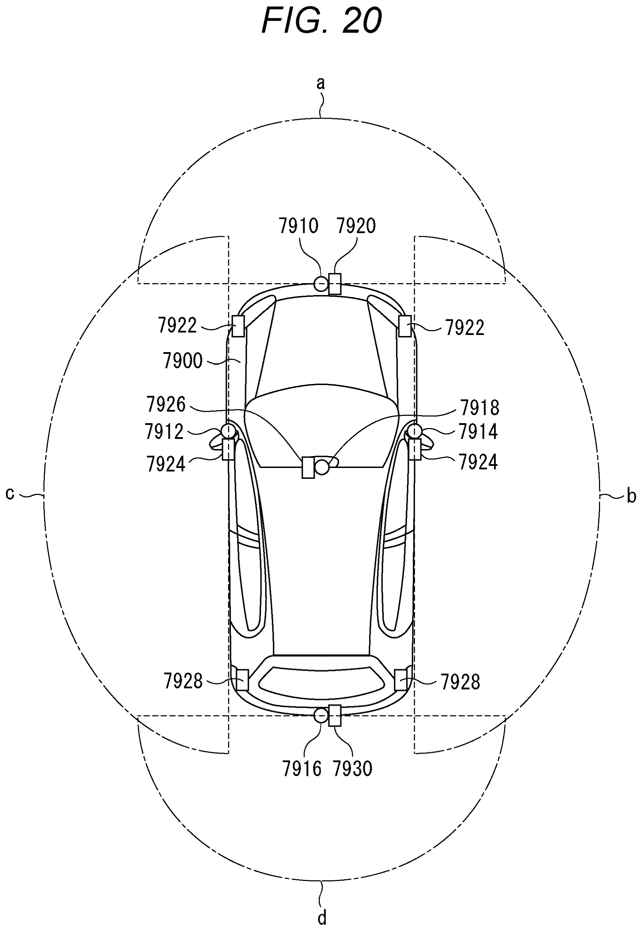

Here, Fig. 20 illustrates an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Note that Fig. 20 illustrates an example of the imaging range of each of the imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to Fig. 19, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magnetooptical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present in the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example in Fig. 19, an audio speaker 7710, a display section 7720, and an instrument panel 7730 are illustrated as examples of the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Note that at least two control units connected to each other via the communication network 7010 in the example illustrated in Fig. 19 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that the present technology may have the following configurations.
(1) A photodetection device including:
   a plurality of first photoelectric conversion elements and a plurality of second photoelectric conversion elements that accumulate charges according to an amount of incident light;
   a first signal processing circuit that performs signal processing by performing analog-to-digital conversion on a plurality of pixel signals according to the amount of incident light on the basis of the charges accumulated in the plurality of first photoelectric conversion elements;
   an event detection circuit that generates an event signal representing a change amount of the amount of incident light on the basis of the charges accumulated in the plurality of second photoelectric conversion elements;
   a first substrate on which the plurality of first photoelectric conversion elements and the plurality of second photoelectric conversion elements are arranged;
   a second substrate stacked on the first substrate and on which the event detection circuit is arranged; and
   a third substrate stacked on the first substrate and the second substrate and on which the first signal processing circuit is arranged.
(2) The photodetection device according to (1), in which
   the first substrate, the second substrate, and the third substrate are stacked in this order.
(3) The photodetection device according to (1) or (2), in which
   the first substrate includes:
   a first pixel including the first photoelectric conversion elements;
   a second pixel including the second photoelectric conversion elements; and
   a pixel array unit including a plurality of the first pixels and a plurality of the second pixels.
(4) The photodetection device according to (3), in which
   an entire region of the event detection circuit is arranged so as to overlap with the pixel array unit in plan view.
(5) The photodetection device according to (3) or (4), further including:
   a plurality of pixel circuits that generates the plurality of pixel signals on the basis of the charges accumulated in the plurality of first photoelectric conversion elements;
   a first transmission unit that transmits the event signal from the second substrate to the third substrate;
   a second transmission unit that transmits the plurality of pixel signals from the plurality of pixel circuits to the third substrate; and
   a third transmission unit that transmits a control signal for controlling at least one of the plurality of first photoelectric conversion elements or the plurality of pixel circuits from the third substrate to at least one of the plurality of first photoelectric conversion elements or the plurality of pixel circuits.
(6) The photodetection device according to (5), in which
   the pixel circuits are arranged on the first substrate, and
   the third transmission unit transmits the control signal from the third substrate to the first substrate.
(7) The photodetection device according to (6), in which
   the second transmission unit is arranged so as to reach the third substrate from the first substrate via the second substrate, and
   the third transmission unit is arranged so as to reach the first substrate from the third substrate via the second substrate.
(8) The photodetection device according to (5), further including a fourth substrate on which the pixel circuits are arranged, in which
   the third transmission unit transmits the control signal from the third substrate to at least one of the first substrate or the fourth substrate, and
   the first substrate, the fourth substrate, the second substrate, and the third substrate are stacked in this order.
(9) The photodetection device according to any one of (5) to (8), in which
   the second substrate includes an event storage unit that stores a plurality of the event signals generated within a predetermined period, and
   the first transmission unit divides the plurality of event signals stored in the event storage unit into a predetermined number of times of transmission in chronological order and transmits the divided event signals to the third substrate.
(10) The photodetection device according to (9), further including:
   a plurality of first signal lines that transmits the plurality of event signals from the event detection circuit to the event storage unit; and
   a plurality of second signal lines that transmits the plurality of event signals from the first transmission unit to the third substrate, in which
   the number of the plurality of second signal lines is a value obtained by dividing the number of the plurality of first signal lines by the predetermined number of times of transmission.
(11) The photodetection device according to (9) or (10), in which
   the second substrate includes a compression unit that compresses the plurality of event signals,
   the first transmission unit transmits the event signals compressed by the compression unit to the third substrate, and
   the third substrate includes:
      a restoration unit that restores the compressed event signals transmitted by the first transmission unit; and
      a second signal processing circuit that performs signal processing on the plurality of event signals restored by the restoration unit.
(12) The photodetection device according to any one of (5) to (11), in which
   the second substrate includes a plurality of first pads connected to an external connection terminal,
   the third substrate includes a plurality of second pads arranged so as to overlap with the plurality of first pads in plan view, and
   the photodetection device further includes a plurality of conductive members that makes each of the plurality of second pads conductive to the corresponding first pad.
(13) The photodetection device according to (12), in which
   the third substrate includes an output unit that transmits image data and event information to outside, and
   the second pad, the output unit, and the first transmission unit are arranged along a first side of the third substrate.
(14) The photodetection device according to (13), in which
   the third transmission unit is arranged along a second side of the third substrate, and
   the second transmission unit is arranged along one side or two sides other than the first side and the second side of the third substrate.
(15) The photodetection device according to (13) or (14), in which
   at least one of the first transmission unit, the second transmission unit, or the third transmission unit includes:
   a via penetrating the second substrate, and
   a first metal pad connected to the via, and
   the third substrate includes a second metal pad bonded to the first metal pad.
(16) The photodetection device according to any one of (5) to (15), further including:
   a histogram generation unit that generates a histogram representing an appearance frequency of each motion amount of a subject on the basis of a plurality of the event signals; and
   a threshold generation unit that determines a threshold to be used for determination as to whether the event detection circuit generates the event signal, on the basis of the histogram, in which
   the event detection circuit generates the event signal on the basis of the threshold.
(17) The photodetection device according to any one of (5) to (16), in which
   the third substrate includes an event removal unit that removes an event signal caused by movement of the plurality of second photoelectric conversion elements among a plurality of the event signals, and
   the first transmission unit transmits the event signal removed by the event removal unit from the second substrate to the third substrate.
(18) The photodetection device according to any one of (1) to (17), in which
   the third substrate includes a blur correction unit that performs blur correction of the plurality of pixel signals on the basis of the event signal.
(19) The photodetection device according to any one of (1) to (18), in which
   the third substrate includes a frame interpolation unit that performs frame interpolation processing of gradation image data generated for each frame by the plurality of pixel signals on the basis of the event signal.
(20) Electronic equipment including:
   a photodetection device; and
   a processing unit that processes image data and event information output from the photodetection device, in which
   the photodetection device includes:
      a plurality of first photoelectric conversion elements and a plurality of second photoelectric conversion elements that accumulate charges according to an amount of incident light;
      a first signal processing circuit that performs signal processing by performing analog-to-digital conversion on a plurality of pixel signals according to the amount of incident light on the basis of the charges accumulated in the plurality of first photoelectric conversion elements;
      an event detection circuit that generates an event signal representing a change amount of the amount of incident light on the basis of the charges accumulated in the plurality of second photoelectric conversion elements;
      a first substrate on which the plurality of first photoelectric conversion elements and the plurality of second photoelectric conversion elements are arranged;
      a second substrate stacked on the first substrate and on which the event detection circuit is arranged; and
      a third substrate stacked on the first substrate and the second substrate and on which the first signal processing circuit is arranged.

Aspects of the present disclosure are not limited to the above-described individual embodiments, but include various modifications that can be conceived by those skilled in the art, and the effects of the present disclosure are not limited to the above-described contents. In other words, various additions, modifications, and partial deletions may be made without departing from the conceptual idea and spirit of the present disclosure derived from the matters defined in the claims and equivalents thereof.

### REFERENCE SIGNS LIST

1 Electronic equipment
2, 2a, 200 Photodetection device
3 Image processing unit
4 Recording unit
5, 22 Control unit
11 Imaging lens
12 Signal line
13 Control line
21, 21a Pixel array unit
21b Pixel circuit group
23 Event detection circuit
23a Event detection pixel circuit
24, 24a, 24b Event buffer
25 Event processing unit
26 AD conversion unit
27 Line buffer
28 Reordering unit
29 Signal processing unit
30 Analog processing unit
31 Digital processing unit
32 Output unit
32a, 32b Interface unit
41, 201 First substrate
42, 42a, 42b, 202 Second substrate
43, 43a, 43b Third substrate
44 Fourth substrate
51 Gradation pixel
52 Gradation pixel circuit
53 Photoelectric conversion element
61 Event detection pixel
62 Logarithmic response unit
62a Transfer unit
62b Charge-to-voltage conversion unit
63 Photoelectric conversion element
64 Buffer
65 Differentiating circuit
66 Comparison circuit
71 Phase-locked loop
71a Clock circuit
72 Digital-to-analog conversion unit
73 Column processing circuit
74, 74a Logic circuit
81 Pixel signal transmission unit
82 Control signal transmission unit
83 Opening
84a, 84b PAD
85 Event signal transmission unit
91 Event storage unit
92 Compression unit
93 Restoration unit
94, 94a Histogram generation unit
95 Threshold generation unit
96 Event removal unit
101 Frame memory
102 Image correction unit
102a Correction unit
102b Frame interpolation unit
103 CPU subsystem
203 Surplus area

## Claims

1. A photodetection device comprising:
a plurality of first photoelectric conversion elements and a plurality of second photoelectric conversion elements that accumulate charges according to an amount of incident light;
a first signal processing circuit that performs signal processing by performing analog-to-digital conversion on a plurality of pixel signals according to the amount of incident light on a basis of the charges accumulated in the plurality of first photoelectric conversion elements;
an event detection circuit that generates an event signal representing a change amount of the amount of incident light on a basis of the charges accumulated in the plurality of second photoelectric conversion elements;
a first substrate on which the plurality of first photoelectric conversion elements and the plurality of second photoelectric conversion elements are arranged;
a second substrate stacked on the first substrate and on which the event detection circuit is arranged; and
a third substrate stacked on the first substrate and the second substrate and on which the first signal processing circuit is arranged.

2. The photodetection device according to claim 1, wherein
the first substrate, the second substrate, and the third substrate are stacked in this order.

3. The photodetection device according to claim 1, wherein
the first substrate includes:
a first pixel including the first photoelectric conversion elements;
a second pixel including the second photoelectric conversion elements; and
a pixel array unit including a plurality of the first pixels and a plurality of the second pixels.

4. The photodetection device according to claim 3, wherein
an entire region of the event detection circuit is arranged so as to overlap with the pixel array unit in plan view.

5. The photodetection device according to claim 3, further comprising:
a plurality of pixel circuits that generates the plurality of pixel signals on a basis of the charges accumulated in the plurality of first photoelectric conversion elements;
a first transmission unit that transmits the event signal from the second substrate to the third substrate;
a second transmission unit that transmits the plurality of pixel signals from the plurality of pixel circuits to the third substrate; and
a third transmission unit that transmits a control signal for controlling at least one of the plurality of first photoelectric conversion elements or the plurality of pixel circuits from the third substrate to at least one of the plurality of first photoelectric conversion elements or the plurality of pixel circuits.

6. The photodetection device according to claim 5, wherein
the pixel circuits are arranged on the first substrate, and
the third transmission unit transmits the control signal from the third substrate to the first substrate.

7. The photodetection device according to claim 6, wherein
the second transmission unit is arranged so as to reach the third substrate from the first substrate via the second substrate, and
the third transmission unit is arranged so as to reach the first substrate from the third substrate via the second substrate.

8. The photodetection device according to claim 5, further comprising a fourth substrate on which the pixel circuits are arranged, wherein
the third transmission unit transmits the control signal from the third substrate to at least one of the first substrate or the fourth substrate, and
the first substrate, the fourth substrate, the second substrate, and the third substrate are stacked in this order.

9. The photodetection device according to claim 5, wherein
the second substrate includes an event storage unit that stores a plurality of the event signals generated within a predetermined period, and
the first transmission unit divides the plurality of event signals stored in the event storage unit into a predetermined number of times of transmission in chronological order and transmits the divided event signals to the third substrate.

10. The photodetection device according to claim 9, further comprising:
a plurality of first signal lines that transmits the plurality of event signals from the event detection circuit to the event storage unit; and
a plurality of second signal lines that transmits the plurality of event signals from the first transmission unit to the third substrate, wherein
the number of the plurality of second signal lines is a value obtained by dividing the number of the plurality of first signal lines by the predetermined number of times of transmission.

11. The photodetection device according to claim 9, wherein
the second substrate includes a compression unit that compresses the plurality of event signals,
the first transmission unit transmits the event signals compressed by the compression unit to the third substrate, and
the third substrate includes:
a restoration unit that restores the compressed event signals transmitted by the first transmission unit; and
a second signal processing circuit that performs signal processing on the plurality of event signals restored by the restoration unit.

12. The photodetection device according to claim 5, wherein
the second substrate includes a plurality of first pads connected to an external connection terminal,
the third substrate includes a plurality of second pads arranged so as to overlap with the plurality of first pads in plan view, and
the photodetection device further comprises a plurality of conductive members that makes each of the plurality of second pads conductive to the corresponding first pad.

13. The photodetection device according to claim 12, wherein
the third substrate includes an output unit that transmits image data and event information to outside, and
the second pad, the output unit, and the first transmission unit are arranged along a first side of the third substrate.

14. The photodetection device according to claim 13, wherein
the third transmission unit is arranged along a second side of the third substrate, and
the second transmission unit is arranged along one side or two sides other than the first side and the second side of the third substrate.

15. The photodetection device according to claim 13, wherein
at least one of the first transmission unit, the second transmission unit, or the third transmission unit includes:
a via penetrating the second substrate; and
a first metal pad connected to the via, and
the third substrate includes a second metal pad bonded to the first metal pad.

16. The photodetection device according to claim 5, further comprising:
a histogram generation unit that generates a histogram representing an appearance frequency of each motion amount of a subject on a basis of a plurality of the event signals; and
a threshold generation unit that determines a threshold to be used for determination as to whether the event detection circuit generates the event signal, on a basis of the histogram, wherein
the event detection circuit generates the event signal on a basis of the threshold.

17. The photodetection device according to claim 5, wherein
the third substrate includes an event removal unit that removes an event signal caused by movement of the plurality of second photoelectric conversion elements among a plurality of the event signals, and
the first transmission unit transmits the event signal removed by the event removal unit from the second substrate to the third substrate.

18. The photodetection device according to claim 1, wherein the third substrate includes a blur correction unit that performs blur correction of the plurality of pixel signals on a basis of the event signal.

19. The photodetection device according to claim 1, wherein
the third substrate includes a frame interpolation unit that performs frame interpolation processing of gradation image data generated for each frame by the plurality of pixel signals on a basis of the event signal.

20. Electronic equipment comprising:
a photodetection device; and
a processing unit that processes image data and event information output from the photodetection device, wherein
the photodetection device includes:
a plurality of first photoelectric conversion elements and a plurality of second photoelectric conversion elements that accumulate charges according to an amount of incident light;
a first signal processing circuit that performs signal processing by performing analog-to-digital conversion on a plurality of pixel signals according to the amount of incident light on a basis of the charges accumulated in the plurality of first photoelectric conversion elements;
an event detection circuit that generates an event signal representing a change amount of the amount of incident light on a basis of the charges accumulated in the plurality of second photoelectric conversion elements;
a first substrate on which the plurality of first photoelectric conversion elements and the plurality of second photoelectric conversion elements are arranged;
a second substrate stacked on the first substrate and on which the event detection circuit is arranged; and
a third substrate stacked on the first substrate and the second substrate and on which the first signal processing circuit is arranged.
